# EUROPÄISCHE PATENTSCHRIFT

(11) **EP 3 775 080 B1**
(45) Veröffentlichungstag und Bekanntmachung des Hinweises auf die Patenterteilung: **09.12.2026**
(21) Anmeldenummer: 19712551.1
(22) Anmeldetag: 15.03.2019
(51) Int. Cl.: C09J 7/38, C09J 11/04, C08J 3/20, B29B 7/42, B29B 7/48

(54) **VERFAHREN ZUM HOMOGENEN EINARBEITEN VON FÜLLSTOFF IN EINE, INSBESONDERE THERMISCH VERNETZBARE, SELBSTKLEBEMASSE AUF BASIS VON NICHT-THERMOPLASTISCHEM ELASTOMER**
METHOD FOR HOMOGENOUSLY INCORPORATING FILLER INTO A SELF-ADHESIVE COMPOUND, IN PARTICULAR A THERMALLY CROSSLINKABLE SELF-ADHESIVE COMPOUND, BASED ON NON-THERMOPLASTIC ELASTOMER
PROCÉDÉ POUR INCORPORER DE MANIÈRE HOMOGÈNE UNE CHARGE DANS UNE MASSE AUTO-ADHÉSIVE, NOTAMMENT THERMO-RÉTICULABLE, À BASE D'ÉLASTOMÈRE NON THERMOPLASTIQUE

(30) Priorität: 27.03.2018 DE 102018204594
(43) Veröffentlichungstag der Anmeldung: 17.02.2021
(73) Patentinhaber: tesa SE, 22848 Norderstedt (DE)
(72) Erfinder: MASSOW, Klaus, 22393 Hamburg (DE); KÖPKE, Tillmann, 79336 Herbolzheim (DE)
(74) Vertreter: tesa SE
(86) Internationale Anmeldenummer: PCT/EP2019/056629
(87) Internationale Veröffentlichungsnummer: WO 2019/185374

(56) Entgegenhaltungen:
- EP-A1- 0 854 178
- EP-A1- 0 960 923
- EP-A2- 2 610 289
- WO-A1-99/42276
- DE-A1- 102008 062 368

## Beschreibung

Die vorliegende Erfindung betrifft ein Verfahren zum homogenen Einarbeiten von Füllstoff in eine, insbesondere thermisch vernetzbare, Selbstklebemasse auf Basis von nicht-thermoplastischem Elastomer in einem kontinuierlich arbeitenden Aggregat mit einem Füll- und einem Compoundierteil, wobei die typischerweise lösungsmittelfreie Selbstklebemasse mindestens eine Festkomponente, mindestens eine Flüssigkomponente und mindestens einen Füllstoff enthält.

Für das anwendungstechnische Anforderungsprofil von insbesondere druckempfindlichen Klebersystemen und den damit hergestellten Haftkleberartikeln sind die zwei physikalischen Phänomene Adhäsion und Kohäsion der Haftkleberschichten von grundsätzlichem Inhalt. Die Adhäsion wird im technischen Sprachgebrauch unter den Begriffen Sofortklebkraft (Tack) und Klebkraft (Peelstrength) behandelt und beschreibt definitionsgemäß die Begriffe "selbstklebend", "Haftkleber", und/oder "druckempfindliche Klebebänder" bzw. die entsprechend gebildeten Begriffe wie "haftklebend", "Selbstklebemasse", d.h. die dauerhafte Verklebung unter "leichtem Andruck" ("Pressure Sensitive Adhesives"). In der vorliegenden Anmeldung werden die Begriffe "Haftklebemasse" und "Selbstklebemasse" synonym verwendet.

Diese Eigenschaft wird insbesondere bei den Haftklebern auf Basis Naturkautschuk durch Einmischen von Klebharzen (Tackifier) und Weichmachern (Plastifizierungsmitteln) mit relativ niedrigen Molekulargewichten erzielt.

Die zweite definitionsgemäße Eigenschaft der Haftkleber ist ihre einfache rückstandsfreie Wiederablösbarkeit nach dem Gebrauch. Dieses Verhalten ist im Wesentlichen bestimmt durch die hochmolekularen Kautschukanteile als Elastomerkomponente, die dem System als Kohäsion (innere Festigkeit) die geforderte Festigkeit bei Scherbeanspruchung verleihen, was insbesondere für den Einsatz der Produkte bei höheren Temperaturen und/oder mechanischen Belastungen Bedeutung erhält. Durch zusätzliche Vernetzung, zum Beispiel über ionisierende Strahlen, reaktive Harzkomponenten oder andere chemische Vernetzer, kann diese Eigenschaft verstärkt werden.

Die Leistungsfähigkeit des Haftklebers ist also im Wesentlichen bestimmt durch das ausgewogene Verhältnis von Adhäsions- und Kohäsions-Eigenschaften und durch Verträglichkeit, Homogenität und Stabilität der Abmischung von Massebestandteilen mit extrem hohen und relativ niedrigen mittleren Molekulargewichten, was bei der Masseherstellung in branchenüblichen Misch- und Knetmaschinen unter Verwendung von Lösemitteln relativ einfach zu erreichen ist.

Die lösungsmittelfreie Compoundierung und Verarbeitung von Selbstklebemassen hat sich dagegen im Wesentlichen nur für die Verarbeitung von schmelzenden, sogenannten thermoplastischen Elastomeren durchgesetzt. Der Masseherstellprozess wird dabei zumeist in Doppelschneckenextrudern bei höheren Temperaturen in der Schmelze durchgeführt, die Beschichtung erfolgt zumeist mittels Breitschlitzdüsen. Der Vorteil der Verwendung von thermoplastischen Elastomeren besteht im Wesentlichen in der Vereinfachung des Streichprozesses. Der Verzicht auf brennbare Lösemittel macht die Trockneranlagen mit ihrem aufwendigen Energieaufwand für das Verdampfen und Rückgewinnen der Lösemittel und den Einsatz explosionsgeschützter Anlagen überflüssig. Hotmeltbeschichtungsanlagen sind kompakt und erlauben erheblich höhere Streichgeschwindigkeiten. Zudem handelt es sich um eine umweltfreundliche Technologie, bei der keine Lösemittelemissionen auftreten.

Für die lösungsmittelfreie Compoundierung thermoplastischer Elastomere werden gemäß dem Stand der Technik vorwiegend Blockcopolymere mit Polystyrolblockanteilen verwendet. Der Vorteil dieser Substanzklasse besteht darin, dass die im Polymer befindlichen Polystyroldomänen oberhalb von 100 °C erweichen, wobei die Viskosität der Klebemasse stark abfällt und dadurch die leichte Verarbeitbarkeit gegeben ist. Nach Abkühlung auf Raumtemperatur bilden sich die Polystyroldomänen zurück und verleihen den auf thermoplastischen Elastomeren basierenden Haftklebern eine gewisse Scherfestigkeit.

Die thermoplastischen Elastomere lassen sich mit klebkraftfördernden Kohlenwasserstoffharzen im Extruderprozess einwandfrei compoundieren. Auf diese Weise lässt sich ein gewünschtes Klebkraftniveau relativ einfach erreichen. Die resultierenden Haftkleber bleiben jedoch empfindlich gegen Temperaturen oberhalb 40 °C. Kritisch ist dieses verbleibende "Kriechverhalten" für die auf dieser Basis hergestellten Selbstklebebänder für eine unbegrenzte Lagerstabilität (Verblocken der Rollen im Stapel insbesondere beim Transport in wärmere Klimazonen) und für die Anwendung bei höheren Arbeitstemperaturen (zum Beispiel als Abdeckbänder in der Automobillackierung, wo derartige Bänder trotz Nachvernetzung ihre Funktionsfähigkeit verlieren, indem der Haftkleber erweicht und die Scherfestigkeit zum Fixieren der Abdeckmaskenpapiere nicht mehr gewährleistet ist).

Aus diesem Grunde haben sich die bekannten Schmelzhaftkleber auf der Basis von Blockcopolymeren fast ausschließlich für Verpackungsbänder und Etiketten für den Einsatz bei Raumtemperaturen durchsetzen können.

Mit nicht-thermoplastischen Elastomeren, wie zum Beispiel Naturkautschuk, lassen sich hingegen die geforderten Scherfestigkeiten erreichen, aber die lösungsmittelfreie Herstellung und Verarbeitung von Naturkautschuk-Haftklebern stellte den Fachmann lange Zeit vor Probleme. Durch die extrem hochmolekularen Anteile des Kautschuks (mit M_{w} ≥ 1 Million) waren lösungsmittelfreie Selbstklebemassen mit der Schmelzhaftklebertechnologie unverarbeitbar oder aber die verwendeten Kautschuke mussten vor der Verarbeitung so stark in ihrem Molekulargewicht reduziert (abgebaut) werden, dass sie infolge dieses Abbaus ihre Eignung für leistungsfähige Selbstklebemassen einbüßten.

EP 0 854 178 A1 beschreibt eine druckempfindliche Hotmelt-Klebemasse auf der Basis nicht-thermoplastischer Elastomerer, erhalten dadurch, dass
a) als Vorbatch eine Masse aus den Elastomeren und einem oder mehreren der folgenden Zusatzstoffe wie Füllstoffe, Alterungsschutzmittel, Weichmacher und Klebharze in einem intensiv scherenden, intensiv kühlenden Mischaggregat lösungsmittelfrei hergestellt wird, wobei die Masse eine Endtemperatur von 100 bis 160 °C aufweist,
b) der Vorbatch in einem zweiten Mischaggregat mit einem oder mehreren der folgenden Zusatzstoffe wie Füllstoffe, Alterungsschutzmittel, Weichmacher und Klebharze lösungsmittelfrei vermischt und homogenisiert wird, wobei die Masse eine Endtemperatur von 100 bis 160 °C aufweist,

und wobei die Gesamtverweilzeit der Masse bei Temperaturen über 100 °C einen Wert von 6 Minuten nicht überschreitet,
so dass die resultierende Hotmelt-Klebmasse eine Viskosität von mehr als 900 Pa*s, insbesondere 900 Pa*s bis 1200 Pa*s, bei 130 °C und einem Schergefälle von 100 s⁻¹ aufweist.

EP 0 960 923 A1 hat ein Verfahren zur Herstellung einer Haftklebemasse zum Gegenstand, welches dadurch gekennzeichnet ist, dass man Klebrigmacher in dispergierter, geschmolzener oder fester Form mit Naturkautschuklatex mischt, wobei der Wassergehalt maximal 45 Gew.-% beträgt.

Mit dem in der EP 1 056 584 B2 beschriebenen Verfahren wurde die Herstellung von Haftklebemassen auf Basis nicht-thermoplastischer Elastomere, gegebenenfalls unter Verwendung von thermisch reaktiven Komponenten, ohne dass ein eigenschaftsschädigender Abbau des Kautschuks und das damit verbundene eigenschränkte Anwendungsprofil der resultierenden Haftklebemasse eintrat, möglich.

DE 10 2008 062 368 A1 beschreibt eine druckempfindliche Klebemasse, bestehend aus einer homogenen Mischung mindestens einer Naturkautschukkomponente und mindestens einer Polyacrylatkomponente, die im Vergleich zu den Einzelkomponenten deutlich verbesserte Eigenschaften in der Kohäsion bzw. der Alterungs- und Witterungsbeständigkeit zeigt. Besonders gute Eigenschaften werden der Schrift zufolge erzielt, wenn die Klebemasse x Gew.-% mindestens einer Naturkautschukkomponente, y Gew.-% mindestens einer Polyacrylatkomponente, v Gew.-% mindestens einer Klebharzkomponente und w Gew.-% Additive enthält,
wobei 10 < x < 80, 10 < y < 95, 0 < v < 50, 0 < w < 10 und x + y + v+ w = 100.

Ein- oder doppelseitiges Klebeband, bestehend aus zumindest einem Träger und zumindest einer Schicht einer solchen Haftklebemasse soll daher ebenfalls über gute Kohäsions- und Alterungsbeständigkeitseigenschaften verfügen.

EP 2 610 289 A2 offenbart ein Verfahren zur Herstellung einer expandierte Mikroballons enthaltenden Klebemasse, welches dadurch gekennzeichnet ist, dass
- unexpandierte Mikroballons in Wasser dispergiert werden, wobei die wässrige Mikroballon-Dispersion einen Mikroballonanteil von 40 bis 45 Gew.-% aufweist;
- wonach diese Dispersion zu der Mischung der Bestandteile zur Bildung der Klebemasse in ein Mischaggregat geleitet,
- dort vermischt wird; und
- nachfolgend expandiert wird.

Nun sind oftmals jedoch Mischungen (Compounds) auf Basis nicht-thermoplastischer Elastomere gewünscht, die Füllstoffe enthalten. Da diese oft zur Agglomerierung neigen, benötigt die Herstellung von füllstoffhaltigen Compounds in der Regel hohe Scher- bzw. Friktionsenergien innerhalb des Compoundieraggregats, um die Agglomerate während des Compoundierens aufzubrechen, sie zu zerteilen und die vereinzelten Füllstoffpartikel gleichmäßig in einer Polymermatrix zu verteilen, also um die Füllstoffe fein dispergiert in die Polymermatrix einarbeiten zu können.

Die zum Dispergieren notwendige Scherenergie führt in vielen Fällen aber zu einer Temperaturerhöhung und/oder zu einem Molmasseabbau der Polymeren, was in der Regel nicht gewünscht wird, da es die späteren Produkteigenschaften in ungünstiger Weise beeinflussen kann. Die Auswirkung der Scherenergie ist dabei umso größer, je höher viskos die Polymermatrix ist.

Eine Temperaturerhöhung der Polymermatrix ist insbesondere immer dann besonders unerwünscht, wenn diese thermisch aktivierbare, d.h. thermische, Vernetzer enthält, und die Temperatur der Matrix in die Nähe der Temperatur gebracht wird, bei der diese Vernetzer den Vernetzungsprozess auslösen. Eine solche Klebemasse würde ihre Eigenschaften in ungewünschter Weise ändern, würde aufgrund eines Viskositätsanstiegs schlechter oder gar nicht mehr beschichtbar sein oder würde sogar innerhalb des Compoundieraggregates soweit vernetzen, dass es bereits zur Ausbildung eines dreidimensionalen Netzwerkes kommt, das eine Entleerung der Maschine unmöglich macht oder diese im schlimmsten Fall sogar zerstört.

Aber auch für einen Prozess, bei dem keine thermischen Vernetzer zum Einsatz kommen, kann es vorteilhaft sein, dass die Temperatur der Polymermatrix nach beendeter Compoundierung nicht zu hoch ist. Dies ist zum Beispiel der Fall, wenn dem Compoundierungschritt eine inline-Beschichtung nachgeschaltet ist, bei der das Verfahren nur bestimmte Temperaturobergrenzen erlaubt.

Aufgabe der vorliegenden Erfindung war es daher, ein Verfahren zur Verfügung zu stellen, mit dem sich Füllstoffe, auch bei Anwesenheit thermisch reaktiver Komponenten, in Selbstklebemassen auf der Basis von nicht-thermoplastischen Elastomeren einarbeiten lassen, wobei die Wärmeentstehung derart gering gehalten wird, dass der resultierende Temperaturanstieg des Compounds die Selbstklebemasse nicht nachteilig beeinflusst und insbesondere gegebenenfalls vorhandene chemische Vernetzer unberührt lässt, so dass eine Vernetzung nicht bereits in unerwünschter Weise bei der Herstellung der füllstoffhaltigen Selbstklebemasse erfolgt, sondern kontrolliert zu einem gewünschten späteren Zeitpunkt.

Gelöst wird diese Aufgabe durch ein Verfahren, wie es im Hauptanspruch 1 dargelegt ist. Gegenstand der Unteransprüche sind dabei vorteilhafte Ausführungsformen des Verfahrens. Schließlich umfasst der Erfindungsgedanke auch Selbstklebemassen, die nach dem erfindungsgemäßen Verfahren erhältlich sind.

Demgemäß betrifft die vorliegende Erfindung ein Verfahren zum homogenen Einarbeiten von Füllstoff in eine, insbesondere thermisch vernetzbare, Selbstklebemasse auf Basis von nicht-thermoplastischem Elastomer in einem kontinuierlich arbeitenden Aggregat mit einem Füll- und einem Compoundierteil, wobei die Selbstklebemasse mindestens eine Festkomponente, mindestens eine Flüssigkomponente und mindestens einen Füllstoff enthält und wobei das Verfahren die folgenden Schritte umfasst:
(a) Aufgabe mindestens eines Teils der mindestens einen Festkomponente, wie insbesondere des nicht-thermoplastischen Elastomers, und gegebenenfalls eines Teils der mindestens einen Flüssigkomponente in den Füllteil;
(b) Übergabe der Komponenten aus Schritt (a) aus dem Füllteil in den Compoundierteil;
(c) gegebenenfalls Zugabe weiterer Festkomponenten oder weiterer Teile der Festkomponenten, typischerweise über Seitenfüttereinrichtungen, in den Compoundierteil;
(d) Zugabe der mindestens einen Flüssigkomponente in den Compoundierteil, soweit noch nicht in Schritt (a) in den Füllteil aufgegeben;
(e) Herstellung einer homogenen Selbstklebemasse im Compoundierteil; und
(f) Austragen der Selbstklebemasse,
dadurch gekennzeichnet, dass zumindest ein Teil des mindestens einen Füllstoffes in zumindest einer Dispersionsflüssigkeit in einem separaten Aggregat, d.h. Hilfsaggregat, vordispergiert und die so erhaltene Dispersion in den Compoundierteil des kontinuierlich arbeitenden Aggregats zugegeben wird, wobei das kontinuierlich arbeitende Aggregat ein Planetwalzenextruder ist. In einer bevorzugten Ausführungsform werden in den Füllteil keine Flüssigkomponenten aufgegeben.

Vorzugsweise ist die Selbstklebemasse thermisch vernetzbar, d.h. bildet bei einer geeigneten Aktivierungstemperatur ein Netzwerk aus.

Mit Festkomponenten sind dabei solche Komponenten gemeint, die sich zum Zeitpunkt ihrer Aufgabe in den Füllteil bzw. Zugabe in den Compoundierteil des kontinuierlich arbeitenden Aggregats in ihrem festen Aggregatzustand befinden. Zu den Festkomponenten gehören typischerweise insbesondere nicht-thermoplastische Elastomere, thermoplastische Elastomere und Alterungsschutzmittel. Auch Klebharze können als Festkomponente zu- bzw. aufgegeben werden. Dies ist dann der Fall, wenn das Klebharz unterhalb seines Erweichungspunkts T_{E} zu- bzw. aufgegeben wird. Typische Erweichungspunkte T_{E} von Klebharzen liegen bei mindestens 40 °C.

Unter Flüssigkomponenten sind erfindungsgemäß dementsprechend solche Komponenten zu verstehen, die sich zum Zeitpunkt ihrer Aufgabe in den Füllteil bzw. Zugabe in den Compoundierteil des kontinuierlich arbeitenden Aggregats in ihrem flüssigen Aggregatzustand befinden oder als Schmelze vorliegen. Klebeharze können daher auch als Flüssigkomponente auf- bzw. zugegeben werden, wenn sie nämlich oberhalb ihres Erweichungspunkts T_{E} zu- bzw. aufgegeben werden, beispielsweise 20 bis 40 °C oberhalb ihres Erweichungspunkts T_{E}. Gleiches gilt analog für verschiedene Oligomere oder Polymere wie zum Beispiel nicht-thermoplastische oder thermoplastische Elastomere. Zu den Flüssigkomponenten gehören des Weiteren insbesondere Weichmacher wie Öle oder Fette, Vernetzer, Farbstoffe oder Weichharze.

Aus Vorstehendem ergibt sich, dass Klebharze sowohl Festkomponente wie auch Flüssigkomponente sein können. Ferner kann ein und dasselbe Klebharz sowohl als Festwie auch Flüssigkomponente zu- bzw. aufgegeben werden, abhängig davon, ob es bei Zu- bzw. Aufgabe fest oder flüssig ist.

Unter Dispersionsflüssigkeit ist im Sinne der vorliegenden Erfindung eine Substanz oder ein Substanzgemisch zu verstehen, in der bzw. in dem der Füllstoff dispergiert wird. Die Dispersionsflüssigkeit liegt in einer Ausführungsform bereits zum Zeitpunkt der Dispergierung mit dem Füllstoff in ihrem flüssigen Aggregatzustand oder als Schmelze vor. Alternativ kann die Dispersionsflüssigkeit eine schmelzbare bzw. verflüssigbare Substanz/Substanzgemisch sein, die zunächst als Feststoff zugeführt und mit dem Füllstoff vermischt wird, wobei die schmelzbare bzw. verflüssigbare Substanz/Substanzgemisch während des Vermischens mit dem Füllstoff oder im Anschluss daran geschmolzen wird. Als Dispersionsflüssigkeit kommen erfindungsgemäß insbesondere Weichmacher wie (Mineral)Öle oder (geschmolzene) Fette, Weichharze oder, besonders bevorzugt, (geschmolzene) Klebharze zum Einsatz.

Vorzugsweise ist ein Klebharz, das als Dispersionsflüssigkeit verwendet wird, bei Umgebungstemperatur fest und wird vor Eindispergierung des Füllstoffes durch Einfluss von Wärme und Scherenergie in eine Schmelze überführt. In einer weiteren bevorzugten Ausführungsform handelt es sich bei der Dispersionsflüssigkeit um ein Weichharz, das bei Umgebungstemperatur bereits weich bis zähflüssig ist. In diesem Fall liegt Dispersionsflüssigkeit bereits zum Zeitpunkt der Dispergierung mit dem Füllstoff in ihrem flüssigen Aggregatzustand bzw. als Schmelze vor.

In der vorliegenden Anmeldung sind unter Füllstoffen typischerweise unlösliche (feste) Zusatzstoffe zu verstehen, die bei der Herstellung der Selbstklebemassen, üblicherweise in größeren Mengen, eingesetzt werden. Sie können Eigenschaften der Selbstklebemassen wie zum Beispiel deren mechanische, elektrische und/oder Verarbeitungseigenschaften ändern (sogenannte aktive Füllstoffe) oder die Eigenschaften im Wesentlichen unverändert lassen (sogenannte inaktive Füllstoffe). Gleichzeitig führen sie häufig zu einer Verbilligung des Produkts. Zu Füllstoffen im Sinne der vorliegenden Erfindung zählen auch Pigmente und Flammschutzmittel.

Im erfindungsgemäßen Verfahren wird Füllstoff homogen in eine Selbstklebemasse eingearbeitet. Das Compoundierteil bringt eine homogene Selbstklebemasse hervor. Mit dem Begriff "homogen" ist dabei typischerweise gemeint, dass in der hergestellten Selbstklebemasse optisch, d.h. insbesondere mit dem bloßen Auge, keinerlei agglomerierte Füllstoffteilchen zu erkennen sind. Die Prüfung der Selbstklebemasse auf Homogenität kann im Rahmen der vorliegenden Anmeldung beispielsweise wie folgt durchgeführt werden: 5 g der Selbstklebemasse werden zwischen zwei Prozesslinern mithilfe einer Heißpresse bei 110°C und 5 bar Druck verpresst. Als Prozessliner werden dabei beidseitig mit unterschiedlich abgestuften Silikonsystemen beschichtete PET-Folien einer Dicke von 75 µm eingesetzt. Nach dem Abkühlen wird der Pressling auseinandergezogen, so dass sich eine Dicke der sich ergebenden Haftklebemasseschicht von etwa 50 µm ergibt. Die Schicht wird vor eine Lampe gehalten. Sie wird als homogen bezeichnet, wenn auf einer gestreckten Fläche von 100 cm² mit dem Auge keine Füllstoffteilchen zu finden sind. Bei der genannten Prüfung sollten vorzugsweise ferner keine unaufgeschlossenen Kautschuk-Partikel zu finden sein und kein nicht eingearbeitetes (Kleb)Harz zu sehen sein.

Erfindungsgemäß wird zumindest ein Teil des oder der Füllstoffe in der Dispersionsflüssigkeit vordispergiert. Besonders bevorzugt ist es, wenn die gesamte Menge an Füllstoff(en) in der Dispersionsflüssigkeit vordispergiert wird. Der Füllstoffanteil der erhaltenen Dispersion kann insbesondere abhängig von der Art des Füllstoffs und der Art der Dispersionsflüssigkeit über einen breiten Bereich variieren. Typische Füllstoffanteile in den Dispersionen sind 20 bis 60 Gew.-%, vorzugsweise 30 bis 50 Gew.-%, jeweils bezogen auf das Gesamtgewicht der Dispersion.

Im erfindungsgemäßen Verfahren wird die für die Dispergierung von Füllstoffen erforderliche Scherenergie aus dem eigentlichen Compoundierprozess herausgenommen und in ein Hilfsaggregat ausgelagert. Bei diesem Hilfsaggregat handelt es sich vorzugsweise um ein kontinuierlich arbeitendes Aggregat wie zum Beispiel einen Doppelschneckenextruder oder einen Planetwalzenextruder. Diese verfügen vorzugsweise über mindestens zwei Gehäuse, über die Flüssigkeiten und/oder Feststoffe an unterschiedlichen Orten, insbesondere kontinuierlich, zugegeben werden können. Zugegeben wird so zum einen die Dispersionsflüssigkeit, bei der es sich vorzugsweise um ein Klebharz handelt. Dieses Klebharz kann bereits im geschmolzenen Zustand zugegeben werden, oder es wird im Hilfsaggregat aufgeschmolzen. Dies kann vor Zugabe des Füllstoffes geschehen. Es ist aber auch möglich, dass Klebharz und Füllstoff zunächst vermischt werden und das Klebharz während des Mischens und/oder im Anschluss daran geschmolzen wird.

Die Dispersionsflüssigkeit wird also in das Hilfsaggregat dosiert (als Feststoff oder als Flüssigkeit bzw. Schmelze) und dort mit einem oder mehreren der in der Rezeptur enthaltenen Füllstoffe, wie beispielsweise agglomerierte Füllstoffe, versetzt. Unter dem Einfluss von Scherung wird eine Füllstoffdispersion erhalten, die typischerweise frei von Agglomeraten ist und dann dem eigentlichen Compoundierprozess zugeführt werden kann. Für die Verteilung des Füllstoffes innerhalb der Polymermatrix ist dann keine wesentliche Scherenergie mehr erforderlich, sondern die den nunmehr desagglomerierten Füllstoff enthaltende Dispersion kann auf einem so geringen energetischen Level eingemischt werden, dass keine hohe Scherung eintritt, die das Molekulargewicht der in der Rezeptur enthaltenen Elastomeren in unerwünschter Weise verringern oder die Temperatur in nicht zulässiger Weise erhöhen würde.

Mit dem vorliegenden Verfahren lassen sich somit Füllstoffe homogen in Selbstklebemassen einarbeiten, wobei die Wärmeentstehung im eigentlichen Compoundierprozess derart gering gehalten wird, dass der resultierende Temperaturanstieg des Compounds die Selbstklebemasse nicht nachteilig beeinflusst und insbesondere gegebenenfalls vorhandene thermisch reaktive Komponenten wie thermische Vernetzer unberührt lässt, so dass eine Vernetzung nicht bereits in unerwünschter Weise bei der Herstellung der füllstoffhaltigen Selbstklebemasse erfolgt, sondern kontrolliert zu einem gewünschten späteren Zeitpunkt.

Beim Austritt der homogenen Selbstklebemasse aus dem Aggregat weist die Masse dementsprechend üblicherweise eine Austrittstemperatur von höchstens 125 °C, vorzugsweise höchstens 115°C und besonders bevorzugt eine Temperatur zwischen 90 °C und 115 °C auf. Die Austrittstemperatur der Selbstklebemasse wird dabei typischerweise mittels Einstechfühler im Produktaustritt ermittelt.

Im Unterschied zu den herkömmlichen Herstellungsverfahren erfolgt durch die Vordispergierung der Füllstoffe in der Dispersionsflüssigkeit gemäß dem Verfahren der vorliegenden Erfindung keine unerwünschte erhöhte Wärmebildung, die eigenschaftsschädigende Reaktionen der eingesetzten Komponenten, insbesondere der Vernetzer, hervorrufen kann. Die Füllstoffe liegen vor Eintritt in das Compoundieraggregat in der Füllstoffdispersion in desagglomeriertem Zustand vor und müssen dadurch im eigentlichen Compoundierprozess nicht dem Einfluss hoher Scherenergie unterworfen werden. Stattdessen werden sie stets zusammen mit der Dispersionsflüssigkeit verarbeitet. Als Dispersionsflüssigkeiten können beispielsweise Weichmacher wie zum Beispiel Öle, insbesondere Mineralöle, oder Fette, und insbesondere Kleb- bzw. Weichharze eingesetzt werden, die entweder flüssig bzw. geschmolzen eingesetzt werden oder erst während der Dispergierung bei Einwirken von Scherenergie und/oder äußerer Temperierung aufschmelzen. Es können somit in der erfindungsgemäßen Selbstklebemasse auch thermisch aktivierbare, d.h. thermische, Vernetzer zum Einsatz kommen. Die Aktivierungstemperatur thermischer Vernetzer liegt typischerweise bei über 50 °C. Die erfindungsgemäß eingesetzten thermischen Vernetzer weisen vorzugsweise eine Aktivierungstemperatur von 100 °C bis 180 °C, bevorzugter von 110 °C bis 160 °C und insbesondere von 120 °C bis 140 °C auf.

Außerdem kann im erfindungsgemäßen Verfahren dementsprechend beispielsweise im Compoundieraggregat, d.h. kontinuierlich arbeitenden Aggregat, mit geringeren Schneckendrehzahlen gefahren werden und/oder auf die Verwendung von Scherung induzierenden Einbauten verzichtet werden, was andernfalls zu einer ungenügenden Dispergierleistung führen würde und Inhomogenitäten innerhalb der Polymermatrix zur Folge hätte.

Zur genaueren Dosierung der Dispersion in das Compoundieraggregat, also einen Planetwalzenextruder, ist es vorteilhaft, das Hilfsaggregat an dessen Austritt mit einer handelsüblichen Schmelzepumpe zu koppeln, wie sie von diversen Herstellern vertrieben werden. Dies gilt in besonderer Weise, wenn das Hilfsaggregat bauartbedingt nicht in der Lage ist, den Druckverlust zur Beschickung des Compoundieraggregats zu überwinden.

Ein Vorteil besteht darin, dass im erfindungsgemäßen Verfahren ein großes Spektrum an Füllstoffen einschließlich Pigmente und Flammschutzmittel auch in thermisch vernetzbaren Polymeren eingesetzt werden kann, deren Verarbeitungstemperaturen naturgemäß in Grenzen gehalten werden muss.

Als (Nano)Füllstoffe kommen zum Beispiel Siliziumdioxid, Aluminiumoxid, Titandioxid oder Schichtsilikate zum Einsatz. Weiterhin sind allgemein unter den bei der Erfindung vorteilhaft einsetzbaren Füllstoffen die Oxide der Alkali-, Erdalkali- und Übergangsmetalle bzw. Mischungen dieser Oxide zu nennen, ferner organische Füllstoffe wie z.B. Lignin, oder Mischungen aus organischen und nicht-organischen Komponenten wie z.B. WPC (wood plastic composites).

Füllstoffe können beispielsweise zur Steigerung der Kohäsion einer Haftklebemasse eingesetzt werden. Füllstoffe können auch den Aufschluss der eingesetzten Polymere verbessern. Außerdem werden Füllstoffe auch zur Gewichts- beziehungsweise Volumenerhöhung beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt. Auch bei Kautschuk-basierenden Polymeren kann man durch geeignete Füllstoffe die Eigenschaften modifizieren, so beispielsweise Härte, Festigkeit, Elastizität und Dehnung. Häufig gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße. Man kann anorganische und organische Füllstoffe auch nach ihrer Dichte unterscheiden. So erhöhen die oft in Klebemassen verwendeten anorganischen Füllstoffe wie Kreide, Titandioxid, Calcium- und Bariumsulfat die Dichte des Composites.

Daneben gibt es Füllstoffe, die die Gesamtdichte des Composites reduzieren können. Hierzu zählen Mikrohohlkugeln, die sehr voluminöse Leichtfüllstoffe sind. Die Kugeln sind beispielsweise mit Luft, Stickstoff, Kohlendioxid oder Kohlenwasserstoffen gefüllt, die Kugelschalen bestehen häufig aus Glas oder auch Polymeren.

Eine weitere Gruppe der Füllstoffe sind die sogenannten biobasierten oder organischen Füllstoffe. Als pflanzliche organische Füllstoffe werden bevorzugt nachwachsende Rohstoffe (nachwachsende organische Materialien) gewählt, insbesondere Holz, Kork, Hanf, Flachs, Gräser, Schilf, Stroh, Heu, Getreide, Mais, Nüsse oder Bestandteile der vorgenannten Materialien, wie Schalen (zum Beispiel Nussschalen), Kerne, Grannen oder dergleichen. Insbesondere kommen Holzmehle, Korkmehle, Getreidemehle, Maismehle und/oder Kartoffelmehle zum Einsatz, ohne sich durch die Aufzählung in der erfinderischen Lehre unnötig beschränken zu wollen. Als tierische organische Füllstoffe kommen insbesondere Knochen, Chitin (zum Beispiel Krebspanzer, Insektenpanzer), Haare, Borsten und Horn in vorteilhafter Weise zur Anwendung, insbesondere in feinverteilter (gemahlener) Form.

Als Pigmente sind insbesondere zu nennen Zinkoxid, Titandioxid und Ruß; als Flammschutzmittel können insbesondere Metallhydroxide wie Aluminiumhydroxid und Magnesiumhydroxid oder Antimonoxide zum Einsatz kommen.

Die Füllstoffanteile der erfindungsgemäß hergestellten Selbstklebemassen können stark variieren und hängen beispielsweise von der Art und Funktion des Füllstoffs ab. Typischerweise beträgt der Füllstoffanteil, bezogen auf die gesamte Selbstklebemasse, bis zu 40 Gew.-%, vorzugsweise 1 bis 30 Gew.-%, bevorzugter 5 bis 25 Gew.-% und insbesondere 12 bis 22 Gew.-%.

Für das erfindungsgemäße Verfahren ist es vorteilhaft, einen Planetwalzenextruder zu verwenden, dessen Compoundierteil durch Zusammenschalten von mindestens zwei, bevorzugter von zumindest drei und besonders bevorzugt zumindest von vier gekoppelten Walzenzylindern verlängert ist. Zum einen ist dadurch trotz Anwesenheit friktionsreduzierender Komponenten zur Vermeidung eines unerwünschten Temperaturanstiegs der Polymermatrix ein vollständiges Aufschließen der Elastomerkomponenten sowie die gewünschte Homogenisier- und Dispergierleistung bei wirtschaftlichen Durchsatzraten möglich; zum anderen ermöglicht das Zusammenschalten vorzugsweise separat temperierter Walzenzylinder eine ausgewogene Temperaturführung des Prozesses, die die Verwendung von thermisch aktivierbaren Vernetzersystemen erlaubt.

Der große Vorteil von Planetwalzenextrudern sind die große Oberflächenerneuerung für Material- und Wärmeaustausch, mit dem sich die über Friktion eingebrachte Energie rasch und effektiv abführen lässt, sowie die geringe Verweilzeit und das enge Verweilzeitspektrum, was sie für Compoundierprozesse, die eine besonders temperaturkontrollierte Fahrweise erfordern, besonders geeignet macht.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil. Der Füllteil besteht typischerweise aus einer Förderschnecke, auf die Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil eines Planetwalzenextruders besteht aus einer angetriebenen Zentralspindel und mehreren Planetenspindeln, die innerhalb eines Walzenzylinders mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Die Materialien werden zwischen Zentral- und Planetenspindeln beziehungsweise zwischen Planetenspindeln und Schrägverzahnung des Walzenteils umgewälzt, sodass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D = 70 mm bis zu sieben Planetenspindeln verwendet, während bei einem Walzendurchmesser von D = 200 mm zum Beispiel zehn und bei einem Walzendurchmesser vo n D = 400 mm beispielsweise 24 Planetenspindeln verwendet werden können.

Gemäß vorliegender Erfindung sind zum Erzielen eines guten Verhältnisses von Compoundiergüte zu Produktrate vorzugsweise mindestens die Hälfte, besonders bevorzugt sogar mindestens ¾ der möglichen Anzahl an Planetenspindeln einzusetzen.

Die Dispersion aus der mindestens einen Dispersionsflüssigkeit und den Füllstoffen wird dem Prozess typischerweise erst zugeführt, nachdem der Aufschluss der Festkomponenten, die beispielsweise über das Füllteil des Planetwalzenextruders zugegeben werden, zu einem überwiegenden Teil erfolgt ist.

Die Zusammensetzung der Dispersion kann mit unterschiedlichen Volumen- und Massenanteilen erfolgen. Die Auswahl der Füllstoffe hängt von den gewünschten Eigenschaften des Endprodukts ab.

Jeder eingesetzte Walzenzylinder eines Planetwalzenextruders kann hinsichtlich Anzahl und Art der Planetenspindeln unterschiedlich bestückt sein und so den jeweiligen rezepturiellen und verfahrenstechnischen Anforderungen angepasst sein.

Zwischen zwei zusammengeschalteten Walzenzylindern eines Planetwalzenextruders befindet sich im Allgemeinen ein Stauring, durch dessen freien Querschnitt die Zentralspindel führt und der die Planetenspindeln eines Walzenzylinders ortsfest hält. Stauringe können verschiedene freie Querschnitte aufweisen, womit der Rückstau des Produkts und damit der Füllgrad beziehungsweise das Ausmaß an Scherenergie variiert und an die Prozessanforderungen angepasst werden kann. Zusätzlich können die Stauringe mit radialen Bohrungen versehen sein, über die Flüssigkeiten wie zum Beispiel die Dispersion enthaltend Füllstoff, Weichmacheröle oder auch Schutzgase wie Stickstoff, Argon, Kohlendioxid o.ä. dem Compoundierteil des Planetwalzenextruders zugeführt werden können.

Die Zentralspindel sowie jeder Walzenzylinder sollte vorzugsweise über einen oder mehrere separate Temperier- beziehungsweise Kühlkreise verfügen, um ein Temperaturregime zu ermöglichen, das den Einsatz thermisch aktivierbarer Vernetzungssysteme erlaubt. In Fällen, wo dies nicht erforderlich ist, können die Temperierkreise zusammengeschalteter Walzenzylinder auch miteinander verbunden werden, um die Anzahl an Temperiergeräten möglichst gering zu halten.

Im Verfahren gemäß vorliegender Erfindung werden typischerweise die Elastomerkomponenten sowie gegebenenfalls zugehörige Alterungsschutzmittel mindestens zu einem Teil, beispielsweise auch vollständig, in den Füllteil des Planetwalzenextruders aufgegeben. Dabei können diese Stoffe sowohl als jeweils separate Komponenten, wie auch als gemeinsamer Premix oder auch als Teilvormischungen dem Compoundieraggregat zugegeben werden. Die Dosierung der Komponenten als Premix eignet sich besonders, wenn die Komponenten ähnliche Darreichungsformen beziehungsweise ähnliche Schüttdichten aufweisen, so dass sich auf diese Weise die Anzahl der Dosiersysteme geringhalten lässt. Premixe lassen sich auf einfache Weise zum Beispiel in Pulvermischern herstellen. Zur Dosierung der einzelnen Festkomponenten eignen sich volumetrisch und gravimetrisch arbeitende Dosiersysteme in gängigen Ausführungen. Auch besteht die Möglichkeit, Flüssigkomponenten oder auch nur Teile hiervon, wie zum Beispiel Weichmacheröl, einem Premix zuzugeben.

Bei Verwendung eines Planetwalzenextruders werden die zudosierten Materialien von der Schnecke des Füllteils in den ersten Walzenzylinder des Planetwalzenextruders transportiert. Zwischen jedem Walzenzylinder können über Bohrungen in den Stauringen flüssige Komponenten wie zum Beispiel Weichmacheröle, Weichharze oder Harzschmelzen zugegeben werden. Über die Menge an Flüssigkeit, die bereits vor Einfluss an Scherenergie zugegeben wird, lassen sich sowohl Abbaugrad der Elastomere wie auch Compoundierungstemperatur der Haftklebemasse beeinflussen. Beispielsweise wird ein besonders geringer Molekulargewichtsabbau der Elastomere erhalten, wenn ein flüssiger Weichmacher bereits dann zugegeben wird, wenn noch keinerlei Einfluss von Friktionsenergie erfolgt, also dieser entweder einem Feststoffpremix zugegeben wird, oder das Weichmacheröl zwischen Füllschnecke und erstem Walzenzylinder kontinuierlich zudosiert wird. Auch ein Aufteilen der Flüssigkomponenten als sogenannter split-feed über die Verfahrenslänge ist möglich und ist ein weiterer Parameter zur Steuerung des Prozesses hinsichtlich Elastomerabbau und Produkttemperatur.

Die Dispersion von zumindest einer Dispersionsflüssigkeit und dem/n gewünschten Füllstoff(en) oder auch nur Teile hiervon werden in einem weiteren Verfahrensschritt dem Compoundierteil zugeführt.

Das erfindungsgemäße Verfahren erlaubt die lösungsmittelfreie Herstellung von Füllstoffe enthaltenden hochleistungsfähigen Selbstklebemassen und insbesondere im Verbund mit einer nachgeschalteten Beschichtungs- und gegebenenfalls Vernetzungseinheit die Herstellung von hochleistungsfähigen Selbstklebebändern unter Erlangung besonderer Kostenvorteile.

Es besteht im Wesentlichen aus den bereits dargelegten Verfahrensschritten, welche optional unter einer Schutzgasatmosphäre durchgeführt werden können.

Beim Austritt der Selbstklebemasse aus dem Aggregat weist die Masse üblicherweise eine Austrittstemperatur von höchstens 125 °C, vorzugsweise höchstens 115°C und besonders bevorzugt eine Temperatur zwischen 90 °C und 115 °C auf. Die Austrittstemperatur der Haftklebemasse wird dabei typischerweise mittels Einstechfühler im Produktaustritt ermittelt. Die Gesamtverweilzeit der Masse im Planetwalzenextruder sollte einen Wert von drei Minuten nicht überschreiten. Die resultierende Hotmelt-Klebmasse weist eine Viskosität zwischen 30.000 und 150.000 Pa*s, insbesondere eine Viskosität zwischen 60.000 und 110.000 Pa*s, bei 110 °C und einem Schergefälle von 100 rad/s auf.

Vorteilhafterweise schließt sich an die Herstellung der Klebemasse die Beschichtung der erhaltenen typischerweise lösemittelfreien Klebemasse mit einem Auftragswerk auf bahnförmiges Material wie insbesondere einen bahnförmigen Träger an, so dass ein Klebeband erhalten wird.

Je nach Viskosität der Selbstklebemasse eignen sich verschiedene Verfahren zur Beschichtung der bahnförmigen Materialien. Selbstklebemassen mit Viskositäten bis 5000 Pa*s bei einem Schergefälle von 1 rad/s, wie sie beispielsweise bei Verwendung höherer Anteile an Weichmacherölen oder durch Zusatz von thermoplastischen Elastomeren zu den nicht-thermoplastischen Elastomeren erhalten werden, lassen sich mittels einer dem Compoundieraggregat nachgeschalteten Extrusionsdüse beschichten, und zwar wird bevorzugt als Extrusionsdüse eine Kleiderbügelverteilkanaldüse eingesetzt. Die Extrusionsdüse wird daher ihrer Verwendung entsprechend auch Beschichtungsdüse genannt. Um einen definierten, vollflächigen Masseauftrag auf dem bahnförmigen Material zu erhalten, ist es vorteilhaft, dass die Selbstklebemasse vor Eintritt in die Extrusionsdüse einer Entgasung unterworfen wird, was besonders wichtig ist im Falle der Verwendung von Schutzgasen während des Compoundierprozesses im Compoundieraggregat.

Gemäß dem Verfahren der vorliegenden Erfindung erfolgt die Entgasung unter Einfluss von Vakuum vorzugsweise in Schneckenmaschinen, die zugleich die Druckverluste der Rohrleitungen und Beschichtungsdüse überwinden können. Hierfür werden Einschneckenextruder besonders bevorzugt, die zudem über eine Druckregelung verfügen, so dass die Beschichtung der bahnförmigen (Träger)Materialien mit Masseaufträgen sehr geringer Schwankungsbreite erfolgen kann.

Eine weitere Möglichkeit zur Beschichtung der bahnförmigen (Träger)Materialien mit der nach dem erfindungsgemäßen Verfahren hergestellten Selbstklebemasse ist die Verwendung von Walzenbeschichtungsauftragswerken oder Mehrwalzen-Beschichtungskalandern, die aus vorzugsweise mindestens drei, besonders bevorzugt aus vier Beschichtungswalzen bestehen, wobei die Selbstklebemasse bei Durchgang durch einen oder mehrere Walzenspalte vor Übergabe auf das bahnförmige Material auf die gewünschte Dicke geformt wird. Dieses Beschichtungsverfahren wird besonders dann bevorzugt, wenn die Viskosität der Selbstklebemasse Werte von 5000 Pa*s bei einem Schergefälle von 1 rad/s übersteigt, da dann eine Beschichtung mit Extrusionsdüsen nicht mehr die erforderte Genauigkeit im Masseauftrag liefert.

Je nach Art des zu beschichtenden bahnförmigen Trägermaterials kann die Beschichtung im Gleichlauf- oder Gegenlaufverfahren erfolgen.

Als bahnförmige Trägermaterialien für die nach dem erfindungsgemäßen Verfahren hergestellten und verarbeiteten Selbstklebemassen sind je nach Verwendungszweck des Klebebandes alle bekannten Träger, gegebenenfalls mit entsprechender chemischer oder physikalischer Oberflächenvorbehandlung der Streichseite sowie antiadhesiver physikalischer Behandlung oder Beschichtung der Rückseite geeignet. Genannt seien beispielsweise gekreppte und ungekreppte Papiere, Polyethylen-, Polypropylen-, mono- oder biaxial orientierte Polypropylenfolien, Polyester-, PVC- und andere Folien, bahnförmige Schaumstoffe, beispielsweise aus Polyethylen und Polyurethan, Gewebe, Gewirke und Vliese.

Schließlich kann das bahnförmige Material ein beidseitig antiadhäsiv beschichtetes Material sein wie Trennpapiere oder Trennfolien.

Die Dicke der Selbstklebemasseschicht auf dem bahnförmigen Material kann zwischen 10 µm und 2000 µm betragen, vorzugsweise zwischen 15 µm und 150 µm.

Schließlich kann die Selbstklebemasse beispielsweise in einer Dicke von 800 µm bis 1200 µm auf einem Trennpapier aufgetragen sein. Eine derartige Klebmassenschicht ist, insbesondere nach Vernetzung, als trägerloses doppelseitiges Selbstklebeband vielseitig anwendbar.

Die Beschichtung ist auf Walzenbeschichtungsauftragswerken oder Mehrwalzen-Beschichtungskalandern bei Temperaturen unterhalb von 100 °C möglich, so dass auch Selbstklebemassen beschichtet werden können, die thermisch aktivierbare Vernetzer enthalten. Zum Zwecke erhöhter Gasblasenfreiheit der beschichteten Klebmasse kann zwischen Compoundieraggregat und Auftragswerk eine Vakuumentgasung, zum Beispiel eine Vakuumkammer, ein Entgasungsextruder oder ähnliches installiert sein.

Vorteilhafterweise erfolgt im Verbund mit Masseherstellung und Beschichtung in einem nachfolgenden Verfahrensschritt die Vernetzung der Selbstklebemasse auf dem bahnförmigen (Träger)Material, so dass das resultierende Selbstklebeband scherfest und temperaturstabil wird.

Die Selbstklebemasse kann durch ionisierende Strahlung, wie zum Beispiel mittels Elektronenstrahlen, vernetzt werden (ESH).

Auch UV-Strahlen können für die Vernetzung eingesetzt werden, hierbei müssen der Selbstklebemasse entsprechende UV-Promotoren zugesetzt werden.

Besonders bevorzugt erfolgt die Vernetzung durch thermisch aktivierbare, d.h. thermische, Vernetzer unter Temperatureinwirkung. Dadurch lassen sich häufig besonders hohe Leistungsfähigkeiten der Selbstklebemasse erzielen. Besonders vorteilhaft ist die thermische Vernetzung beispielsweise bei vergleichsweise dicken zu vernetzenden Selbstklebemasseschichten, da auf diesem Weg typischerweise Vernetzungsgradienten (im Gegensatz zur Vernetzung mittels Strahlung) innerhalb der Schicht vermieden werden können. Auch im Falle ESH-sensibler Träger ist die Vernetzung durch thermisch aktivierbare Vernetzer unter Temperatureinwirkung besonders interessant.

Die für die thermische Vernetzung der Selbstklebemasse notwendige Erwärmung kann mit Hilfe der vorbekannten Techniken erfolgen, insbesondere mit Hilfe von Hochtemperatur-Kanälen, aber auch mit Hilfe von Infrarot-Strahlern oder mittels hochfrequenter magnetischer Wechselfelder, beispielsweise HF- UHF- oder Mikrowellen.

Die Vernetzung der Haftklebemasse kann weiterhin mittels einer Kombination der vorstehend genannten Vernetzungstechniken (ionisierende Strahlung, UV-Strahlung, thermisch) erfolgen, wie zum Beispiel einer Kombination von ESH-Vernetzung und thermischer Vernetzung durchgeführt werden.

Es resultiert eine sehr scherfeste druckempfindliche Selbstklebemasse, die in ihren Eigenschaften gleichartigen, im Lösemittelverfahren hergestellten Selbstklebemassen vergleichbar ist.

Mit einer Selbstklebemasse auf Basis von nicht-thermoplastischem Elastomer ist erfindungsgemäß typischerweise eine Selbstklebemasse gemeint, deren Elastomer zu mindestens 40 Gew.-%, vorzugsweise mindestens 50 Gew.-%, aus nicht-thermoplastischen Elastomer besteht. In einer bevorzugten Ausführungsform besteht das in der Selbstklebemasse enthaltene Elastomer zu mindestens 90 Gew.-%, und insbesondere zu 100 Gew.-%, d.h. ausschließlich, aus nicht-thermoplastischem Elastomer. Den nicht-thermoplastischen Elastomeren können somit zur Verbesserung der Verarbeitbarkeit thermoplastische Elastomere mit einem Gewichtsanteil von typischerweise 10 bis 50 Gew.-% zugesetzt werden, und zwar bezogen auf den Gesamtelastomeranteil der Selbstklebemasse. Stellvertretend genannt seien an dieser Stelle vor allem die besonders verträglichen Styrol-Isopren-Styrol- (SIS) und Styrol-Butadien-Styrol (SBS) -Typen.

Vorteilhafterweise ist das nicht-thermoplastische Elastomer ausgewählt aus der Gruppe der Naturkautschuke oder der Synthesekautschuke oder es besteht aus einem beliebigen Blend aus Naturkautschuken und/oder Synthesekautschuken. Der Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau, ausgewählt werden. Der Synthesekautschuk oder die Synthesekautschuke können insbesondere aus der Gruppe der statistisch copolymerisierten Styrol-Butadien-Kautschuke (SBR), der Butadien-Kautschuke (BR), der Acrylnitril-Butadien-Kautschuke (NBR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends ausgewählt werden.

Bei der Herstellung der Selbstklebemasse wird insbesondere zur Einstellung einer geeigneten Adhäsion häufig Klebharz eingesetzt, beispielsweise bei Selbstklebemassen auf Basis von Naturkautschuk. Unter der Bezeichnung "Klebharz", englisch "Tackifier Resin", versteht der Fachmann einen Stoff auf Harzbasis, der die Klebrigkeit erhöht. Typischerweise eingesetzte Klebharzmengen hängen insbesondere von der Art des eingesetzten Elastomers ab. Bei bestimmten Elastomerarten wie insbesondere Acrylatkautschuken (ACM) wird aufgrund deren Eigenklebrigkeit häufig auf Klebharzzugabe verzichtet. Im Allgemeinen werden jedoch bei der Herstellung einer erfindungsgemäßen Selbstklebemasse insgesamt 30 bis 160 phr Klebharz eingesetzt, vorzugsweise 50 bis 130 phr, bevorzugter 80 bis 120 phr Klebharz. In diesen Bereichen lassen sich häufig gleichzeitig besonders gute Adhäsions- und Kohäsionswerte erzielen.

Die in der vorliegenden Anmeldung gemachten Angaben in phr (engl. "parts per hundred rubber") bedeuten jeweils Gewichtsteile der betreffenden Komponente bezogen auf den Gesamtanteil an in der Selbstklebemasse enthaltenem Elastomer.

Als Klebharze sind alle vorbekannten und in der Literatur beschriebenen Klebharze einsetzbar. Genannt seien insbesondere die Kolophoniumharze, deren disproportionierte, hydrierte, polymerisierte, veresterte Derivate und Salze, die aliphatischen und aromatischen Kohlenwasserstoffharze, Polyterpenharze und Terpenphenolharze. Beliebige Kombinationen dieser und weiterer Harze können eingesetzt werden, um die Eigenschaften der resultierenden Klebemasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Als Klebharze können beispielsweise insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals) und hydrierte Polymerisate von bevorzugt C₈- und C₉-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C₈- und C₉-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C₅/C₉-Polymerisate (zum Beispiel ECR-373; Exxon Chemicals) und aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Hydrierte Kohlenwasserstoffharze sind als Abmischkomponente für vernetzbare Styrolblockcopolymere, wie beispielsweise in EP 0 447 855 A1, US 4,133,731 A und US 4,820,746 A beschrieben, besonders geeignet, da durch die Abwesenheit von Doppelbindungen die Vernetzung nicht gestört werden kann.

Darüber hinaus können aber auch nicht hydrierte Harze eingesetzt werden, wenn Vernetzungspromotoren wie zum Beispiel mehrfunktionelle Acrylate eingesetzt werden. Besonders bevorzugt unter diesen Bedingungen ist der Einsatz von Polyterpenharzen auf der Basis von α-Pinen (Piccolyte A- Serie der Firma Hercules, Dercolyte A- Serie der Firma DRT), da diese neben einer hohen Kohäsion auch eine sehr hohe Adhäsion auch bei hohen Temperaturen gewährleisten.

Aber auch andere nicht hydrierte Kohlenwasserstoffharze, nicht hydrierte Analoga der oben beschriebenen hydrierten Harze, können eingesetzt werden. Durch die bevorzugte Verwendung von Vernetzungspromotoren ist ebenfalls der Einsatz von kolophoniumbasierenden Harzen möglich. Wegen ihrer geringen Adhäsion bei erhöhten Temperaturen werden diese hauptsächlich nur als Abmischkomponenten eingesetzt.

Zur Stabilisierung der Haftklebemasse werden üblicherweise primäre Antioxidantien (Antioxidationsmittel) wie zum Beispiel sterisch gehinderte Phenole, sekundäre Antioxidantien wie zum Beispiel Phosphite oder Thioether und/oder C-Radikalfänger zugesetzt.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Wie bereits vorstehend erläutert, erfolgt in einer bevorzugten Ausführungsform der Erfindung im Verbund mit Masseherstellung und Beschichtung in einem nachfolgenden Verfahrensschritt eine thermische Vernetzung der Selbstklebemasse auf dem bahnförmigen (Träger)Material, so dass das resultierende Selbstklebeband scherfest und temperaturstabil wird (vgl. Anspruch 17).

Zum Zwecke der thermisch induzierten chemischen Vernetzung, d.h. thermischen Vernetzung, sind bei dem erfindungsgemäßen Verfahren alle vorbekannten thermisch aktivierbaren chemischen Vernetzer, d.h. thermischen Vernetzer, wie insbesondere beschleunigte Schwefel- oder Schwefelspendersysteme, Isocyanatsysteme, reaktive Melamin-, Formaldehyd- und (optional halogenierte) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar. In einer besonders bevorzugten Ausführungsform der thermischen Vernetzung der Selbstklebemasse bildet der thermische Vernetzer ein Netzwerk mit dem nicht-thermoplastischen Elastomer aus, d.h. das Netzwerk ergibt sich aus einer Reaktion des thermischen Vernetzers mit dem nicht-thermoplastischen Elastomer. In einer alternativen Ausführungsform der thermischen Vernetzung der Selbstklebemasse bildet der thermische Vernetzer ein Netzwerk mit in der Selbstklebemasse enthaltenem thermoplastischem Elastomer aus, d.h. das Netzwerk ergibt sich aus einer Reaktion des thermischen Vernetzers mit dem thermoplastischen Elastomer. In einer weiteren Ausführungsform der thermischen Vernetzung der Selbstklebemasse bildet der thermische Vernetzer für sich selbst ein Netzwerk, d.h. das Netzwerk ergibt sich aus einer Reaktion des thermischen Vernetzers mit sich selbst. Wenn ein nicht-thermoplastisches Elastomer oder ein thermoplastisches Elastomer mit einem thermischen Vernetzer ein Netzwerk bilden soll, muss das Elastomer thermisch vernetzbar sein. Dies bedeutet, dass es funktionelle Gruppen aufweisen muss, die bei einer geeigneten Temperatur mit einem geeigneten thermischen Vernetzer reagieren. Typische funtkionelle Gruppen sind insbesondere C=C-Doppelbindungen, Epoxidgruppen, Carbonsäuregruppen, Carbonsäureanhydridgruppen, Hydroxygruppen, Aminogruppen oder Mischungen davon.

Erfindungsgemäß werden die thermischen Vernetzer vorzugsweise bei Temperaturen von 100 °C bis 180 °C, bevorzugter von 110 °C bis 160 °C und ganz besonders bevorzugt bei Temperaturen von 120 °C bis 140 °C aktiviert.

Anhand der folgenden Beispiele und Figuren soll die Erfindung näher beschrieben werden, ohne damit die Erfindung einschränken zu wollen.

### Beispiele

Als Compoundieraggregat wurde in den Beispielen des erfindungsgemäßen Verfahrens (und auch im Vergleichsbeispiel) ein Planetwalzenextruder der Firma ENTEX Rust & Mitschke GmbH verwendet. Er bestand aus einem Einschnecken-Füllteil (1) und vier gekoppelten Walzenzylindern (2a - 2d) mit einer Länge von jeweils 400 mm und einem Durchmesser von je 70 mm. Zwischen den Walzenzylindern befanden sich Stauringe (3a - 3c) mit unterschiedlich großen Durchtrittsflächen, durch die die Massen beim Übergang vom vorherigen in den jeweils stromabwärts nachfolgenden Walzenzylinder durchgeleitet werden. Die Stauringe (3a - 3c) halten die Planetenspindeln des Extruders ortsfest und unterwerfen die Masse einem gewissen Schereinfluss.

Die freie Durchtrittsfläche betrug beim ersten Stauring (3a) zwischen dem ersten (2a) und dem zweiten Walzenzylinder (2b) 330 mm², beim zweiten Stauring (3b) zwischen dem zweiten (2a) und dritten Walzenzylinder (2c) 185 mm² und beim dritten Stauring (3c) zwischen dem dritten (2c) und vierten Walzenzylinder (2d) 855 mm². Die ersten beiden Walzenzylinder (2a, 2b) hinter dem Füllteil (1) waren mit jeweils sieben Planetenspindeln bestückt, die stromabwärts letzten beiden Walzenzylinder (2c, 2d) enthielten jeweils sechs Planetenspindeln. Die Zentralspindel und die Walzenzylinder (2a - 2d) verfügten jeweils über einen eigenen Temperierkreis. Als Temperiermedium wurde Wasser verwendet.

Als separates Aggregat (Hilfsaggregat) zum Dispergieren der Füllstoffe wurde in den Beispielen des erfindungsgemäßen Verfahrens ein Doppelschneckenextruder (6) der Firma LEISTRITZ mit einem Schneckendurchmesser von 50 mm verwendet. Die aktive Verfahrenslänge betrug 40*D (D = Durchmesser einer Extruderschnecke). Das zu schmelzende Festharz wurde über einen handelsüblichen gravimetrischen Dosierer in die Öffnung des ersten Gehäuses zugegeben, die Füllstoffe wurden stromab über handelsübliche gravimetrische Dosierer in eine Öffnung des fünften Gehäuses zudosiert. Das Einbringen der Füllstoffe in den Doppelschneckenextruder erfolgte bei diesen Beispielen mittels Seitenfüttereinrichtung.

Die Verfahrenslänge zum Aufschmelzen des Harzes sowie für das Eindispergieren der Füllstoffe in die Harzschmelze betrug jeweils 8*D. In diesen Bereichen bestand das Schneckenpaar aus einer Kombination von Knetblockeinheiten mit 45°, 60° und 90° Versatz. Der restliche Teil der Schnecke bestand ausschließlich aus dichtkämmenden Förderelementen.

Der Planetwalzenextruder war jeweils mit einer elektrisch beheizten Schmelzepumpe der Firma MAAG, Typ extrex EX 45-5, gekoppelt, die als Austragsorgan für die Selbstklebemasse aus dem Planetwalzenextruder diente. Über diese Schmelzepumpe und einen beheizbaren Schlauch wurde die im Planetwalzenextruder hergestellte Selbstklebemasse einem scherarmen Doppelschneckenextruder übergegeben (nicht in den Figuren gezeigt), in dem sie unter dem Einfluss von Vakuum von Luft befreit wurde. Der Doppelschneckenextruder zur Entgasung war von der Firma Krauss Maffei Berstorff, Typ ZE42x36D. Er wurde mit einer Gehäusetemperatur von 110°C betrieben. Zur Entgasung der Selbstklebemasse wurde bei einem Druck am Vakuumdom von kleiner als 10 mbar absolut gearbeitet.

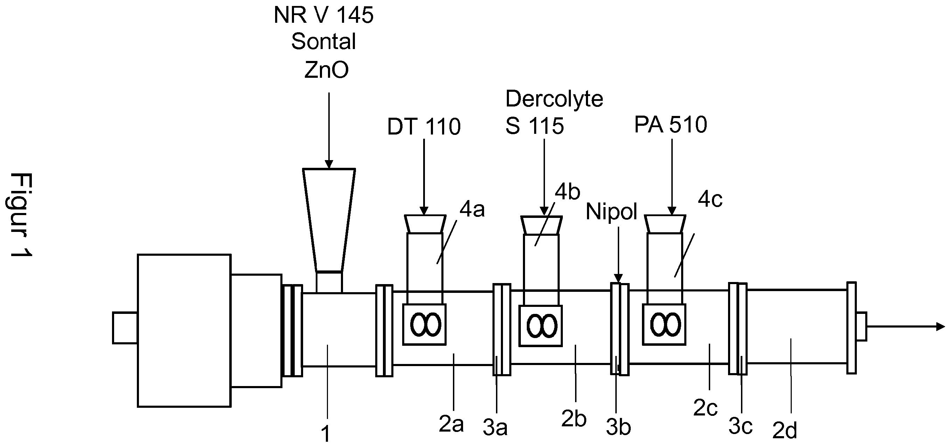

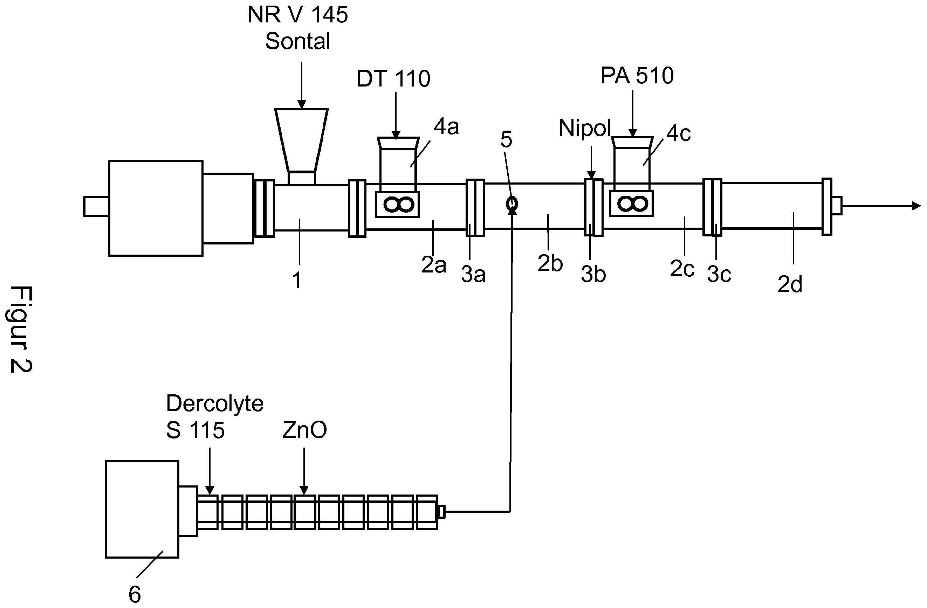

Figur 1 zeigt den Aufbau des eingesetzten Planetwalzenextruders und die Zugabeorte der Komponenten in den Planetwalzenextruder gemäß dem Vergleichsbeispiel. Die Figuren 2 bis 5 zeigen den Aufbau des eingesetzten Planetwalzenextruders und des Doppelschneckenextruders (Hilfsaggregats) zum Vordispergieren von Füllstoff sowie die jeweiligen Zugabeorte der Komponenten in den Planetwalzenextruder bzw. Doppelschneckenextruder gemäß den erfindungsgemäßen Beispielen 1 bis 4. Einzelheiten gehen aus der Beschreibung zu dem jeweiligen Beispiel (bzw. Vergleichsbeispiel) hervor.

### Eingesetzte Rohstoffe

In den Beispielen 1 bis 4 bzw. im Vergleichsbeispiel wurden die in Tabelle 1 aufgeführten Rohstoffe eingesetzt.

**Tabelle 1: Eingesetzte Rohstoffe.**

| | Name | Typ | Hersteller |
|---|---|---|---|
| Elastomer | NR V 145 | Naturkautschuk | Weber&Schaer |
| | Nipol | | Zeon |
| | | Acrylnitril-Butadien-Kautschuk | |
| | Vistanex | Butylen/Isobutylenkautschuk | Exxon |
| | Elast SIS | Quintac (Polystyrol-Polyisopren-Blockcopolymer) | Zeon |
| Klebharz | Regalite R1100 | Kohlenwasserstoffharz | Eastman Chemical |
| | DT 110 | Terpenphenolharz | DRT |
| | Dercolyte S 115 | β-Pinen-Harz | DRT |
| | Dertophene T | Terpenphenolharz | DRT |
| | Harz 100 | Kolophonium-Harz (Säure) | Diamantino Malho |
| Vernetzerharz | PA 510 | Alkyl-Phenolharz | SI-Group |
| Plastifizierungsmittel | Wollfett | Lanolin | Lanolines Stella |
| | Gelböl (Ondina 919) | Kohlenwasserstoff mit komplexer variabler Zusammensetzung | Shell |
| Füllstoff | ZnO weiß | Zinkoxid | Lanxess |
| | Durafill 200 | Siliciumdioxid | Grace |
| | Fill Kreide MS 40 | Calciumcarbonat | Vereinigte Kreidewerke Dammann |
| Alterungsschutzmittel | Irganox 1076 | Sterisch gehindertes Phenol | BASF SE |
| | Irganox 1726 | 2,4-Bis(dodecylthiomethyl)-6-methylphenol | BASF SE |
| | MMBI | 2-Mercapto-4(5)-methylbenzimidazol | Lanxess |
| | Sontal (LOWINOX^{®} AH25) | 2,5-di-tert-pentylhydrochinon | Addivant |

### Vergleichsbeispiel

Im Vergleichsbeispiel wurde die in Tabelle 2 angegebene Rezeptur A verwendet.

**Tabelle 2: Rezeptur A.**

| Komponente | Masse TH 21 |
|---|---|
| NR V 145 | 46,5 % |
| ZnO weiß | 9,3 % |
| Harz DT110 | 14,0 % |
| Harz S115 | 20,0 % |
| Nipol | 4,7 % |
| Harz PA 510 | 4,7 % |
| Sontal | 0,8 % |

Der Naturkautschuk NR V 145, der Füllstoff Zinkoxid (ZnO) weiß sowie das Sontal wurden in das Einschnecken-Füllteil (1) des Planetwalzenextruders dosiert. Die Harze wurden im festen Zustand über Seitenfüttereinrichtungen (4a - 4c) in die jeweiligen Öffnungen der Walzenzylinder (2a - 2c) des Planetwalzenextruders eindosiert. Dabei wurde das Klebharz DT110 im ersten Walzenzylinder (2a), das Klebharz S115 im zweiten Walzenzylinder (2b) und das Vernetzerharz PA 510 im dritten Walzenzylinder (2c) zugegeben.

Das Nipol wurde in einer Tankschmelzeinheit (nicht gezeigt) bei 70°C vorgewärmt und über die im Boden der Tankschmelze integrierte Schmelzepumpe in eine Bohrung des sich hinter dem zweiten Walzenzylinder (2b) und vor dem dritten Walzenzylinder (2c) befindlichen Staurings (3b) kontinuierlich in den Planetwalzenextruder eindosiert.

Figur 1 zeigt die Aufteilung der Rezepturbestandteile für die hier gewählte Fahrweise.

Der Gesamtdurchsatz aller Komponenten betrug 50 kg/h. Die Kühlwassertemperatur im Einlauf der Zentralspindel betrug 8°C, das Wasser zur Temperierung der Walzenzylinder (2a - 2d) hatte eine Einlauftemperatur von 90°C.

Die Drehzahl der Zentralspindel wurde in einem Bereich zwischen 70 Umdrehungen pro Minute und 130 Umdrehungen pro Minute variiert. Bei keiner Spindeldrehzahl konnte eine homogene Selbstklebemasse erhalten werden, sondern es waren stets mit dem bloßen Auge unaufgeschlossene Agglomerate von Zinkoxid in der Polymermatrix zu erkennen.

Bei der höchsten hier erprobten Drehzahl wies die Selbstklebemasse am Austritt eine Temperatur von 131°C auf.

### Beispiel 1

Zur Herstellung eines Hochtemperatur-Cloth Tapes auf Baumwollträgerbasis gemäß dem erfindungsgemäßen Verfahren wurde ebenfalls die Rezeptur A verwendet, allerdings wurde jetzt das Zinkoxid (ZnO) zuerst in einer Harzschmelze vordispergiert, bevor es dem Planetwalzenextruder zugegeben wurde.

Der Naturkautschuk NR V 145 und das Sontal wurden mittels gravimetrischer Dosierer in das Einschnecken-Füllteil (1) des Planetwalzenextruders dosiert. Die Zugabe des Klebharzes DT110 erfolgte über einen Seitenfütterextruder (4a), der zu Beginn des ersten Walzenzylinders (2a) an den Planetwalzenextruder angekoppelt war.

Im separaten Doppelschneckenextruder (6) wurde das Klehharz S115 aufgeschmolzen, stromab mit ZnO weiß versetzt und weiterhin eine homogene Dispersion von Zinkoxid in der Harzschmelze hergestellt. Der Doppelschneckenextruder (6) wurde mit einer Schneckendrehzahl von 80 Umdrehungen pro Minute und einer Gehäusetemperatur von 170°C betrieben. Die Dispersion wurde dann über eine Öffnung (5) in der Gehäusewand zu Beginn des zweiten Walzenzylinders (2b) kontinuierlich in den Planetwalzenextruder eingespeist.

Das Nipol wurde wie im Vergleichsbeispiel in einer Tankschmelzeinheit bei 70°C vorgewärmt und über die im Boden der Tankschmelze integrierte Schmelzepumpe in eine Bohrung des sich hinter dem zweiten Walzenzylinder (2b) und vor dem dritten Walzenzylinder (2c) befindlichen Staurings (3b) kontinuierlich in den Planetwalzenxtruder eindosiert.

Die Zugabe des Vernetzerharzes PA 510 erfolgte über einen weiteren Seitenfütterextruder (4c), der am dritten Walzenzylinder (2c) des Planetwalzenextruders angekoppelt war.

Figur 2 zeigt die Aufteilung der Rezepturbestandteile für die hier gewählte Fahrweise.

Der Gesamtdurchsatz aller Komponenten betrug 50 kg/h. Der Planetwalzenextruder wurde mit einer Drehzahl der Zentralspindel von 90 Umdrehungen pro Minute betrieben. Die Kühlwassertemperatur im Einlauf der Zentralspindel betrug 8°C, das Wasser zur Temperierung der Walzenzylinder (2a - 2d) hatte eine Einlauftemperatur von 90°C.

Mit dem erfindungsgemäßen Verfahren wurde eine homogene Polymermatrix erhalten, in der optisch, insbesondere mit dem bloßen Auge, keinerlei agglomerierte Teilchen zu vernehmen waren. Die am Ende des Planetwalzenxtruders erhaltene Selbstklebemasse wies eine Austrittstemperatur von 111°C auf.

Die Selbstklebemasse wurde dann mittels Schmelzepumpe und beheiztem Schlauch einem Doppelschneckenextruder übergeben, in dem sie unter Vakuumeinfluss von 3 mbar von der eingeschlossenen Luft befreit wurde.

Die von Luft befreite Selbstklebemasse wurde unmittelbar nach dem Herstellprozess auf einen, nach branchenüblichen Verfahren imprägnierten, mit bekannter Releaseschicht ausgerüsteten Baumwollträger, welcher ein Flächengewicht von 200 g/m² aufwies, mit einer Schichtdicke von 120 µm aufgebracht.

Die Beschichtung der Klebemasse erfolgte analog Beispiel 4 in einer Arbeitsbreite von 300 mm. Alle Walzen waren auf 140 °C temperiert. Die Beschichtungsgeschwindigkeit betrug 50 m/min.

Das so erhaltene Klebeband wies eine Klebkraft von 4,5-5,5 N/cm auf Stahl bzw. von 2,0-2,5 N/cm auf PE und eine Eignung als Abdeckband mit kurzzeitiger Temperaturbelastbarkeit bis zu 140 °C auf. Das Vernetzungsdelta der Klebmasse bei 180°C Vernetzungstemperatur lag bei 10000 Pa*s.

### Beispiel 2

Zur Herstellung von Allzweckklebebändern mit Gewebeträgern diente die folgende Rezeptur B (Tabelle 3).

**Tabelle 3: Rezeptur B.**

| Komponente | Masse La NRE146 |
|---|---|
| NR V 145 | 19,2 % |
| Vistanex | 9,0 % |
| Dertophene T | 15,0 % |
| Harz 100 | 15,1 % |
| Wollfett | 16,0 % |
| Gelböl | 3,8 % |
| ZnO weiß | 20,5 % |
| Irganox 1076 | 1,0 % |
| MMBI | 0,5% |

Zur Herstellung dieser Selbstklebemasse wurde der Versuchsaufbau analog Beispiel 1 verwendet.

Die Elastomere NK V 145 und Vistanex sowie die Alterungsschutzmittel Irganox 1076 und MMBI wurden über gravimetrische Dosierer kontinuierlich auf das Einschnecken-Füllteil (1) des Planetwalzenextruders dosiert. Ein Drittel der Menge an Harz 100, entsprechend 5 Gew.-% bezüglich der Gesamtrezeptur, wurde als Festharz über einen Seitenfütterextruder (4a) in den ersten Walzenzylinder (2a) dosiert.

Mit den gleichen Extruderparametern wie in Beispiel 1 wurde das Zinkoxid weiß im Doppelschneckenextruder (6) im Harz Dertophene T sowie einer Teilmenge vom Harz 100 dispergiert. Dazu wurden das Harz Dertophene T sowie zwei Drittel der Harzmenge an Harz 100, entsprechend einem Anteil von 10,1 Gew.-% an der Gesamtrezeptur, aufgeschmolzen und mit der gesamten Menge an Zinkoxid versetzt. Das in der Harzschmelze fein dispergierte Zinkoxid wurde dann über eine Öffnung (5) in der Gehäusewand zu Beginn des zweiten Walzenzylinders (2b) kontinuierlich in den Planetwalzenextruder eingespeist.

Das Wollfett wurde in einem Tankschmelzgerät bei 70°C verflüssigt und mittels Dosierpumpe über eine radiale Bohrung des vor dem dritten Walzenzylinder (2c) befindlichen zweiten Staurings (3b) in den Planetwalzenextruder eindosiert.

Das Gelböl wurde über eine radiale Bohrung des hinter dem dritten Walzenzylinder (2c) befindlichen dritten Staurings (3c) dem Planetwalzenextruder zugeführt.

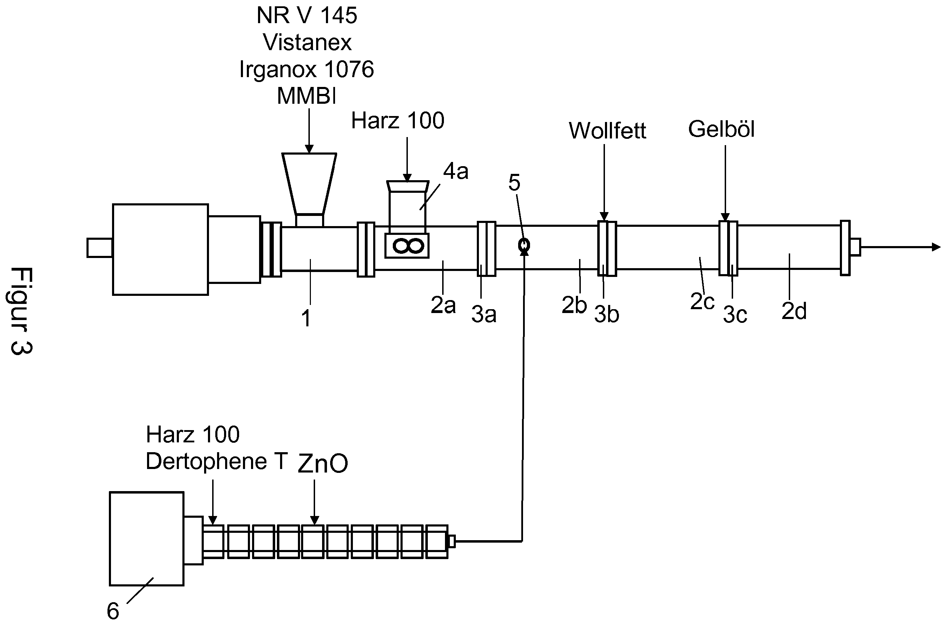

Figur 3 zeigt die Aufteilung der Rezepturbestandteile für die hier gewählte Fahrweise.

Der Gesamtdurchsatz aller Komponenten betrug 50 kg/h. Der Planetwalzenxtruder wurde mit einer Drehzahl der Zentralspindel von 110 Umdrehungen pro Minute betrieben. Die Kühlwassertemperatur im Einlauf der Zentralspindel betrug 8°C, das Wasser zur Temperierung der Walzenzylinder (2a - 2d) hatte eine Vorlauftemperatur von 90°C.

Mit dem erfindungsgemäßen Verfahren wurde eine homogene Polymermatrix erhalten, in der optisch, insbesondere mit dem bloßen Auge, keinerlei agglomerierte Teilchen zu erkennen waren. Die am Ende des Planetwalzenextruders erhaltene Selbstklebemasse wies eine Austrittstemperatur von 99°C auf.

Die Selbstklebemasse wurde mittels einer an den Planetwalzenextruder gekoppelten Schmelzepumpe in einen Doppelschneckenextruder überführt, in dem sie bei einem Druck 3 mbar von Luft befreit wurde. Dieser Doppelschneckenextruder wurde mit einer Drehzahl von 100 Umdrehungen pro Minute betrieben. Die Gehäusetemperaturen betrugen 110°C.

Die so erhaltene Klebmasse wurde auf ein Viskosecellulose-Gewebe (Zellwolle), welche rückseitig mit einem branchenüblichen Release-Lack ausgerüstet wurde und ein Flächengewicht von 240 g/m² hatte, in einer Schichtdicke von 115 µm aufgebracht.

Die Herstellung von Allzweckgewebebändern erfolgte nach dem Verfahren aus Beispiel 1. Anstelle der Baumwollträgerbahn wurde hier das Viskosecellulose-Gewebe über die Anlegewalze geführt und darauf dann die über den Walzenbeschichtungskalander ausgeformte 115 µm dicke Klebstoffschicht beschichtet. Die Beschichtung erfolgte mit 50 m/min in einer Arbeitsbreite von 400 mm.

Das so hergestellte Band hat eine Klebkraft auf Stahl von >4 N/cm, und ist als Allzweckklebeband für verschiedenste Zwecke geeignet.

### Beispiel 3

Die Herstellung eines doppelseitigen Teppichverlegebandes auf Gewebeträgerbasis erfolgte mit der Rezeptur C (Tabelle 4).

**Tabelle 4: Rezeptur C.**

| Komponente | Masse La NRE145 |
|---|---|
| NR V 145 | 28,2 % |
| Dertophene T | 15,0 % |
| Harz 100 | 15,1 % |
| Wollfett | 16,0 % |
| Gelböl | 3,8 % |
| ZnO weiß | 20,5 % |
| Irganox 1076 | 1,0 % |
| MMBI | 0,5% |

Mit der Besonderheit, dass diese Rezeptur kein Vistanex enthielt, wurde zur Herstellung dieser Selbstklebemasse der gleiche Versuchsaufbau wie in Beispiel 2 verwendet.

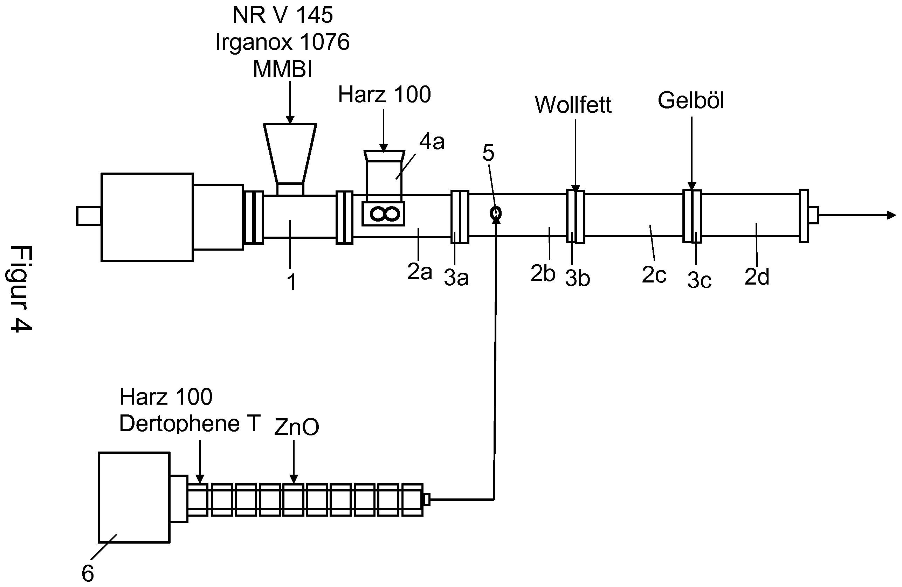

Figur 4 zeigt die Aufteilung der Rezepturbestandteile für die hier gewählte Fahrweise.

Mit dem erfindungsgemäßen Verfahren wurde eine homogene Polymermatrix erhalten, in der optisch, insbesondere mit dem bloßen Auge, keinerlei agglomerierte Teilchen zu erkennen waren. Die am Ende des Planetwalzenextruders erhaltene Selbstklebemasse wies eine Austrittstemperatur von 104°C auf.

Nach Entgasung der Selbstklebemasse wie in Beispiel 2 beschrieben wurde die Klebmasse mit Hilfe der Transferbeschichtung beidseitig auf ein handelsübliches Viskosecellulose-Gewebe (Zellwolle) und einem Raumgewicht von 130 g/m² mit einer Schichtdicke von 2 x 100 g/m² aufgebracht.

Die Herstellung eines doppelseitigen Teppichverlegebandes auf Gewebeträgerbasis erfolgte. Ein beidseitig silikonisiertes Trennpapier wurde über das Verfahren aus Beispiel 1 mit 100 µm direkt beschichtet. Über eine Kaschierstation wird die Zellwolle zukaschiert und der Verbund in einem zweiten Arbeitsgang auf die offene Seite ebenfalls direkt mit 100 µm Klebstoffauftrag beschichtet. Die Beschichtung erfolgte mit einer Geschwindigkeit von 30 m/min.

Die so erhaltenen Klebebänder weisen eine Klebkraft auf Stahl von >3,5 N/cm und sind als doppelseitige Klebebänder mit toleranzausgleichenden und dämpfenden Eigenschaften für verschiedenste Zwecke geeignet.

### Beispiel 4

Die Herstellung eines Klebebands für Automotive Anwendungen auf Polyester-Vliesträgerbasis erfolgte mit der Rezeptur D (Tabelle 5).

**Tabelle 5: Rezeptur D.**

| Komponente | Masse La NRE145 |
|---|---|
| NR V 145 | 15,3 % |
| Elast SIS | 15,3 % |
| Regalite R1100 | 33,9 % |
| Durafill 200 | 10,0 % |
| Fill Kreide MS 40 | 25,0 % |
| Irganox 1726 | 0,5 % |

Die beiden Elastomere NR V 145 und Elast SIS wurden separat in das Einschnecken-Füllteil (1) des Planetwalzenextruders dosiert.

Das Harz Regalite R1100 wurde im Doppelschneckenextruder (6) bei Gehäusetemperaturen von 170°C kontinuierlich aufgeschmolzen. In diese Harzschmelze wurden die Füllstoffe Durafill 200 und Fill Kreide MS 40 mit einer Extruderdrehzahl von 130 Umdrehungen pro Minute homogen eindispergiert und dann über eine Öffnung (5) im Gehäuse des zweiten Walzenzylinders (2b) in den Planetwalzenextruder eindosiert.

Zum Aufschmelzen des Elast SIS wurde die Temperatur des zweiten Walzenzylinders (2b) auf 140°C eingestellt, die Temperatur der drei anderen Walzenzylinder (2a, 2c, 2d) betrug 90°C. Zur Temperierung der Zentralspindel wurde diese mit achtgrädigem Kühlwasser beaufschlagt.

Das Alterungsschutzmittel Irganox 1726 wurde in einer Tankschmelzeinheit auf 70°C aufgeheizt und über eine radiale Bohrung im zweiten Stauring (3b), der sich zwischen dem zweiten Walzenzylindern (2b) und dem dritten Walzenzylinder (2c) befindet, dem Prozess im Planetwalzenextruder zugeführt.

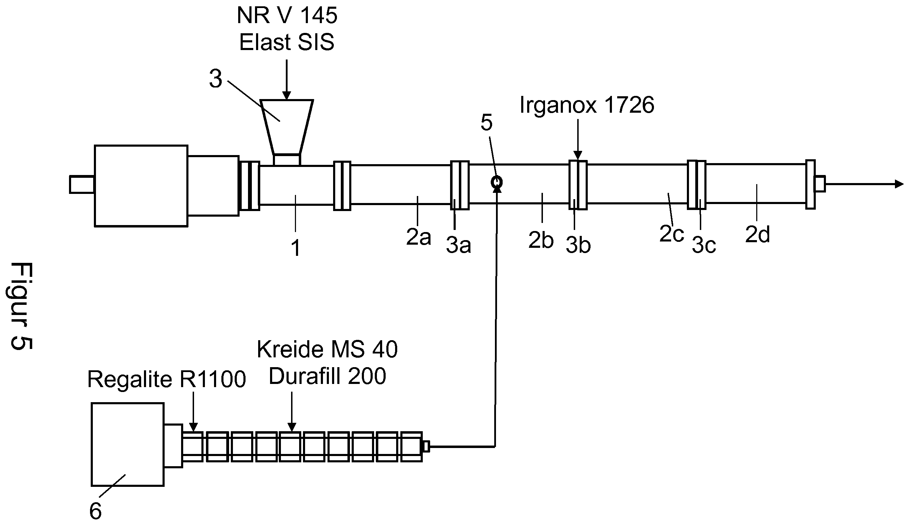

Figur 5 zeigt die Aufteilung der Rezepturbestandteile für die hier gewählte Fahrweise.

Der Gesamtdurchsatz aller Rezepturkomponenten betrug 40 kg/h. Für diese Rezeptur 4 wurde der Planetwalzenextruder mit einer Drehzahl der Zentralspindel von 110 Umdrehungen pro Minute betrieben.

Mit dem erfindungsgemäßen Verfahren wurde eine homogene Polymermatrix erhalten, in der optisch, insbesondere mit dem bloßen Auge, keinerlei agglomerierte Teilchen zu erkennen waren. Die am Ende des Planetwalzenextruders erhaltene Selbstklebemasse wies eine Austrittstemperatur von 123°C auf.

Nach Entgasung der Masse in einem nachfolgenden Doppelschneckenextruder wie in Beispiel 3 beschrieben wurde die so erhaltene Klebmasse auf ein Polyester-Vlies (Flächengewicht von 70 g/m²) in einer Schichtdicke von 70 µm aufgebracht.

Die Herstellung von Polyester-Vliesbändern erfolgte nach dem Verfahren aus Beispiel 1. Anstelle der Baumwollträgerbahn wurde hier das Polyester-Vlies über die Anlegewalze geführt und darauf dann die über den Walzenbeschichtungskalander ausgeformte 70 µm dicke Klebstoffschicht beschichtet. Die Beschichtung erfolgte mit 50 m/min in einer Arbeitsbreite von 400 mm.

Das so hergestellte Band hat eine Klebkraft auf Stahl von >3 N/cm, und ist als Klebeband für Automotive Anwendungen geeignet.

### Prüfmethoden

### Klebkraft

Die Bestimmung der Klebkraft wurde wie folgt durchgeführt: Als definierter Haftgrund wurden eine Stahlfläche, eine Polyethylenfläche (PE), eine Glasfläche, eine PVC-Fläche und Sandpapier mit 600er Körnung (S600) eingesetzt. Das zu untersuchende Klebeband wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das Klebeband in einem Winkel von 180° und einer Abzugsgeschwindigkeit von 300 mm/min vom Haftgrund mit einem Zugprüfungsgerät (Firma Zwick) abgezogen und die hierfür bei Raumtemperatur benötigte Kraft gemessen. Der Messwert (in N/cm) ergab sich als Mittelwert aus drei Einzelmessungen.

Zur Bestimmung der Klebkraft eines Klebebands auf der Rückseite desselben (KKRS, Klebkraft Rückseite) wird ein Prüfstreifen, ohne an seiner Rückseite berührt zu werden, auf den Prüfuntergrund wie zum Beispiel einer Stahlplatte aufgelegt. Ein zweiter Prüfstreifen wird sodann deckungsgleich auf die Rückseite des ersteren unter Vermeidung von Lufteinschlüssen aufgebracht durch fünfmaliges doppeltes Überrollen mittels einer 4 kg Rolle verklebt.

Bei der Messung wird der obere Prüfstreifen vom darunterliegenden unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt.

Zudem wird der gleiche Test durchgeführt, wobei die verklebten Proben 3 Tage bei 23 °C beziehungsweise 40 °C gelagert, anschließend auf Raumtemperatur konditioniert und dann wie oben beschrieben gemessen werden.

### Erweichungspunkt T_{E}

Die Angaben zum Erweichungspunkt T_{E}, auch Erweichungstemperatur genannt, von Klebharzen und verschiedenen Oligomeren bzw. Polymeren beziehen sich auf das Ring-Kugel-Verfahren gemäß DIN EN 1427:2007 bei entsprechender Anwendung der Bestimmungen (Untersuchung der Harzprobe statt des Bitumens bei ansonsten beibehaltener Verfahrensführung); die Messungen erfolgen im Glycerolbad.

## Patentansprüche

1. Verfahren zum homogenen Einarbeiten von Füllstoff in eine, insbesondere thermisch vernetzbare, Selbstklebemasse auf Basis von nicht-thermoplastischem Elastomer in einem kontinuierlich arbeitenden Aggregat mit einem Füll- und einem Compoundierteil, wobei die Selbstklebemasse mindestens eine Festkomponente, mindestens eine Flüssigkomponente und mindestens einen Füllstoff enthält und wobei das Verfahren die folgenden Schritte umfasst:
(a) Aufgabe mindestens eines Teils der mindestens einen Festkomponente, wie insbesondere des nicht-thermoplastischen Elastomers, und gegebenenfalls eines Teils der mindestens einen Flüssigkomponente in den Füllteil;
(b) Übergabe der Komponenten aus Schritt (a) aus dem Füllteil in den Compoundierteil;
(c) gegebenenfalls Zugabe weiterer Festkomponenten oder weiterer Teile der Festkomponenten in den Compoundierteil;
(d) Zugabe der mindestens einen Flüssigkomponente in den Compoundierteil, soweit noch nicht in Schritt (a) in den Füllteil aufgegeben;
(e) Herstellung einer homogenen Selbstklebemasse im Compoundierteil; und
(f) Austragen der Selbstklebemasse,
**dadurch gekennzeichnet, dass** zumindest ein Teil des mindestens einen Füllstoffes in zumindest einer Dispersionsflüssigkeit in einem separaten Aggregat vordispergiert und die so erhaltene Dispersion in den Compoundierteil des kontinuierlich arbeitenden Aggregats zugegeben wird, wobei das kontinuierlich arbeitende Aggregat ein Planetwalzenextruder ist.

2. Verfahren nach Anspruch 1, **dadurch gekennzeichnet, dass** die Dispersionsflüssigkeit mindestens ein Weichmacher wie (Mineral)ÖI oder Fett, Weichharz und/oder Klebharz ist, und bevorzugt mindestens ein Klebharz ist.

3. Verfahren nach Anspruch 1 oder 2, **dadurch gekennzeichnet, dass** mindestens eine der Festkomponenten nicht-thermoplastisches Elastomer, thermoplastisches Elastomer, Klebharz, vorzugsweise thermischer Vernetzer und/oder Alterungsschutzmittel ist.

4. Verfahren nach einem der Ansprüche 1 bis 3, **dadurch gekennzeichnet, dass** mindestens eine der Flüssigkomponenten nicht-thermoplastisches Elastomer, thermoplastisches Elastomer, Weichmacher wie Fett oder Öl, Farbstoff, Weichharz, Klebharz und/oder vorzugsweise thermischer Vernetzer ist.

5. Verfahren nach einem der Ansprüche 1 bis 4, **dadurch gekennzeichnet, dass** das nicht-thermoplastische Elastomer ausgewählt ist aus der Gruppe der Naturkautschuke, der statistisch copolymerisierten Styrol-Butadien-Kautschuke (SBR), der Butadien-Kautschuke (BR), der Acrylnitril-Butadien-Kautschuke (NBR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA), der Polyolefine, der Polyurethane und Blends davon.

6. Verfahren nach einem der Ansprüche 1 bis 5, **dadurch gekennzeichnet, dass** im Compoundierteil ferner mindestens ein typischerweise thermischer Vernetzer zugegeben wird, der insbesondere ausgewählt ist aus der Gruppe der Schwefel-, der beschleunigten Schwefel-, der reaktiven Phenolharz- und Diisocyanatvernetzungssysteme.

7. Verfahren nach einem der Ansprüche 1 bis 6, **dadurch gekennzeichnet, dass** der Füllstoff ausgewählt ist aus der Gruppe bestehend aus den Oxiden der Alkali-, Erdalkali- oder Übergangsmetalle, oder einer Mischung dieser Oxide und Lignin.

8. Verfahren nach einem der Ansprüche 1 bis 7, **dadurch gekennzeichnet, dass** das Compoundierteil des Planetwalzenextruders zumindest aus zwei, bevorzugter aus zumindest drei und besonders bevorzugt zumindest aus vier gekoppelten Walzenzylindern besteht.

9. Verfahren nach Anspruch 8, **dadurch gekennzeichnet, dass** die Walzenzylinder des Planetwalzenextruders mindestens die Hälfte, vorzugsweise mehr als 3/4 der möglichen Anzahl an Planetenspindeln enthält.

10. Verfahren nach einem der Ansprüche 1 bis 9, **dadurch gekennzeichnet, dass** das separate Aggregat ein Mehrwellenextruder, vorzugsweise ein Doppelschneckenextruder ist, wobei der Mehrwellenextruder über mindestens ein, vorzugsweise über mindestens zwei Gehäuse verfügt, über die Komponenten wie Klebharze sowie die zu dispergierenden Füllstoffe, vorzugsweise an unterschiedlichen Orten, kontinuierlich zugegeben werden können.

11. Verfahren nach einem der Ansprüche 1 bis 10, **dadurch gekennzeichnet, dass** die gesamte Menge des mindestens einen Füllstoffes in der zumindest einen Dispersionsflüssigkeit vordispergiert wird.

12. Verfahren nach einem der Ansprüche 1 bis 11, **dadurch gekennzeichnet, dass** die Selbstklebemasse am Austritt aus dem kontinuierlich arbeitenden Aggregat eine Temperatur von höchstens 125°C, vorzugsweise höchstens 115°C, besonders bevorzugt von 90°C bis 115 °C aufweist.

13. Verfahren nach einem der Ansprüche 1 bis 12, **dadurch gekennzeichnet, dass** die Selbstklebemasse auf ein bahnförmiges Material beschichtet wird, wobei die Beschichtung des bahnförmigen Materials vorzugsweise mit einem Walz- oder Kalanderwerk erfolgt, wobei die Selbstklebemasse bei Durchgang durch einen oder mehrere Walzenspalte vor Übergabe auf das bahnförmige Material auf die gewünschte Dicke geformt wird.

14. Verfahren nach Anspruch 13, **dadurch gekennzeichnet, dass** die Selbstklebemasse in einem der Beschichtung nachfolgenden Schritt vernetzt, vorzugsweise thermisch oder mittels Elektronenstrahlen vernetzt, und besonders bevorzugt thermisch vernetzt wird.

15. Selbstklebemasse erhältlich nach einem Verfahren gemäß einem der Ansprüche 1 bis 14.

## Claims

1. A method for the homogeneous incorporation of filler into a self-adhesive compound, in particular a thermally crosslinkable self-adhesive compound based on non-thermoplastic elastomer, in a continuously operating unit with a filling part and a compounding part, wherein the self-adhesive compound comprises at least one solid component, at least one liquid component and at least one filler, and wherein the method comprises the following steps:
(a) charging at least a portion of the at least one solid component, in particular such as the non-thermoplastic elastomer, and optionally a portion of the at least one liquid component, into the filling part;
(b) transferring the components from step (a) out of the filling part into the compounding part;
(c) optionally, feeding further solid components or further portions of the solid components into the compounding part;
(d) feeding the at least one liquid component into the compounding part, insofar as it has not yet been charged into the filling part in step (a);
(e) producing a homogeneous self-adhesive compound in the compounding part; and
(f) discharging the self-adhesive compound,
**characterized in that** at least a portion of the at least one filler is pre-dispersed in at least one dispersion liquid in a separate unit and the dispersion obtained in this manner is fed into the compounding part of the continuously operating unit, wherein the continuously operating unit is a planetary roller extruder.

2. The method as claimed in claim 1, **characterized in that** the dispersion liquid is at least one plasticizer such as (mineral) oil or fat, soft resin and/or tackifying resin, and is preferably at least one tackifying resin.

3. The method as claimed in claim 1 or claim 2, **characterized in that** at least one of the solid components is non-thermoplastic elastomer, thermoplastic elastomer, tackifying resin, preferably thermal crosslinking agent and/or antioxidant.

4. The method as claimed in one of claims 1 to 3, **characterized in that** at least one of the liquid components is non-thermoplastic elastomer, thermoplastic elastomer, plasticizer such as fat or oil, dye, soft resin, tackifying resin and/or, preferably, thermal crosslinking agent.

5. The method as claimed in one of claims 1 to 4, **characterized in that** the non-thermoplastic elastomer is selected from the group of natural rubbers, random styrene-butadiene rubber copolymers (SBR), butadiene rubbers (BR), acrylonitrile-butadiene rubbers (NBR), synthetic polyisoprenes (IR), butyl rubbers (IIR), halogenated butyl rubbers (XIIR), acrylate rubbers (ACM), ethylene-vinyl acetate copolymers (EVA), polyolefins, polyurethanes and blends thereof.

6. The method as claimed in one of claims 1 to 5, **characterized in that** in the compounding part, furthermore, at least one typically thermal crosslinking agent is fed in, which crosslinking agent is in particular selected from the group of sulphur, accelerated sulphur, reactive phenolic resin and diisocyanate crosslinking systems.

7. The method as claimed in one of claims 1 to 6, **characterized in that** the filler is selected from the group consisting of the oxides of alkali metals, alkaline earth metals or transition metals, or a mixture of these oxides and lignin.

8. The method as claimed in one of claims 1 to 7, **characterized in that** the compounding part of the planetary roller extruder consists of at least two, more preferably of at least three and particularly preferably of at least four coupled roller cylinders.

9. The method as claimed in claim 8, **characterized in that** the roller cylinders of the planetary roller extruder contain at least half, preferably more than 3/4, of the possible number of planetary spindles.

10. The method as claimed in one of claims 1 to 9, **characterized in that** the separate unit is a multi-screw extruder, preferably a twin-screw extruder, wherein the multi-screw extruder is provided with at least one housing, preferably at least two housings, via which components such as tackifying resins as well as the fillers to be dispersed can be fed in continuously, preferably at different locations.

11. The method as claimed in one of claims 1 to 10, **characterized in that** the total quantity of the at least one filler is pre-dispersed in the at least one dispersion liquid.

12. The method as claimed in one of claims 1 to 11, **characterized in that** at the outlet from the continuously operating unit, the self-adhesive compound has a temperature of at most 125 °C, preferably at most 115 °C, more preferably from 90 °C to 115 °C.

13. The method as claimed in one of claims 1 to 12, **characterized in that** the self-adhesive compound is coated onto a material in the form of a web, wherein the coating of the material in the form of a web is preferably carried out with a roll unit or calendar unit, wherein the self-adhesive compound is shaped to the desired thickness by passage through one or more nips prior to transfer onto the material in the form of a web.

14. The method as claimed in claim 13, **characterized in that** in a step following the coating, the self-adhesive compound is crosslinked, preferably crosslinked thermally or by means of electron beams, and particularly preferably thermally crosslinked.

15. A self-adhesive compound which in can be obtained in accordance with a method as claimed in one of claims 1 to 14.

## Revendications

1. Procédé d'incorporation homogène de charges dans une masse auto-adhésive à base d'un élastomère non-thermoplastique, laquelle est notamment thermiquement réticulable, dans un appareil à fonctionnement continu comportant une partie de remplissage et une partie de compoundage, la masse auto-adhésive contenant au moins un constituant solide, au moins un constituant liquide et au moins une charge, le procédé comprenant les étapes suivantes :
(a) introduction d'au moins une portion de l'au moins constituant solide, s'agissant notamment de l'élastomère non-thermoplastique, et optionnellement d'une portion de l'au moins un constituant liquide dans la partie de remplissage ;
(b) transfert des constituants issus de l'étape (a) depuis la partie de remplissage dans la partie de compoundage ;
(c) optionnellement, rajout d'autres constituants solides ou d'autres portions des constituants solides dans la partie de compoundage ;
(d) ajout de l'au moins un constituant liquide dans la partie de compoundage, si celui-ci n'a pas encore été introduit à l'étape (a) dans la partie de remplissage ;
(e) préparation d'une masse auto-adhésive homogène dans la partie compoundage ; et
(f) retrait de la masse auto-adhésive,
**caractérisé en ce qu'**au moins une portion de l'au moins une charge subit un dispersion préalable, au sein d'un appareil séparé, dans un liquide de dispersion pour verser la dispersion ainsi obtenue dans la partie de compoundage de l'appareil à fonctionnement continu, ledit appareil à fonctionnement continu étant une extrudeuse à cylindres planétaires.

2. Procédé selon la revendication 1, **caractérisé en ce que** le liquide de dispersion correspond à au moins un plastifiant tel qu'une huile (minérale) ou une graisse, une résine plastifiante et/ou une résine collante, s'agissant préférentiellement d'au moins une résine collante.

3. Procédé selon les revendications 1 ou 2, **caractérisé en ce qu'**au moins un des constituants solides correspond à un élastomère non-thermoplastique, un élastomère thermoplastique, une résine collante, et de préférence à un agent de réticulation thermique et/ou un agent antivieillissement.

4. Procédé selon l'une des revendications 1 à 3, **caractérisé en ce qu'**au moins un des constituants liquides correspond à un élastomère non-thermoplastique, un élastomère thermoplastique, un plastifiant tel qu'une graisse ou huile, un colorant, une résine plastifiante, une résine collante et/ou de préférence à un agent de réticulation thermique.

5. Procédé selon l'une des revendications 1 à 4, **caractérisé en ce que** ledit élastomère non-thermoplastique est choisi dans le groupe des caoutchoucs naturels, des caoutchoucs styrène-butadiène à copolymérisation statistique (SBR), des caoutchoucs butadiène (BR), des caoutchoucs acrylonitrile-butadiène (NBR), des polyisoprènes synthétiques (IR), des caoutchoucs butyle (IIR), des caoutchoucs butyle halogénés (XIIR), des caoutchoucs acrylate (ACM), des copolymères d'éthylène / acétate de vinyle (EVA), des polyoléfines, des polyuréthanes ou des mélanges homogènes de ceux-ci.

6. Procédé selon l'une des revendications 1 à 5, **caractérisé en ce que** l'on ajoute en outre au moins un agent de réticulation, typiquement de nature thermique, dans la partie de compoundage, lequel est notamment choisi dans le groupe des systèmes de réticulation de type soufre, soufre avec accélérateur, à réaction entre une résine phénolique et un diisocyanate.

7. Procédé selon l'une des revendications 1 à 6, **caractérisé en ce que** ladite charge est choisie dans le groupe constitué d'oxydes de métaux alcalin, alcalino-terreux ou de transition, ou d'un mélange entre ces oxydes et de la lignine.

8. Procédé selon l'une des revendications 1 à 7, **caractérisé en ce que** la partie de compoundage de l'extrudeuse à cylindres planétaires est constituée d'au moins deux, préférentiellement d'au moins trois et, avec une préférence particulière, d'au moins quatre cylindres de fourreau couplés.

9. Procédé selon la revendication 8, **caractérisé en ce que** les cylindres de fourreau de l'extrudeuse à cylindres planétaires contient au moins la moitié, de préférence plus que les 3/4, du nombre possible de tiges planétaires.

10. Procédé selon l'une des revendications 1 à 9, **caractérisé en ce que** ledit appareil séparé est une extrudeuse à plusieurs arbres, s'agissant d'une extrudeuse bi-vis, l'extrudeuse à plusieurs arbres disposant d'au moins un, préférentiellement d'au moins deux boîtiers à travers lesquels des constituants comme les résines collantes ainsi que les charges à disperser peuvent être ajoutés continuellement, de préférence à différents endroits.

11. Procédé selon l'une des revendications 1 à 10, **caractérisé en ce que** l'intégralité de la quantité de l'au moins une charge subit une dispersion préalable dans l'au moins un liquide de dispersion.

12. Procédé selon l'une des revendications 1 à 11, **caractérisé en ce que** la masse auto-adhésive présente, lorsqu'elle sort de l'appareil à fonctionnement continu, une température inférieure à égale à 125 °C, de préférence inférieure ou égale à 115 °C, avec une préférence particulière comprise entre 90 °C et 115 °C.

13. Procédé selon l'une des revendications 1 à 12, **caractérisé en ce que** la masse auto-adhésive est appliquée sous forme de couche sur un matériau en bande, ce revêtement dudit matériau en bande étant réalisé au moyen d'un ensemble de cylindres ou de calandres, la masse auto-adhésive étant façonnée par un passage à travers une ou plusieurs fentes de cylindre, de manière à qu'elle présente l'épaisseur souhaitée avant d'être transférée sur ledit matériau en bande.

14. Procédé selon la revendication 13, **caractérisé en ce que** la masse auto-adhésive est réticulée dans une étape ultérieure à la l'application sous forme de couche, préférentiellement de manière thermique ou par irradiation électronique, avec une préférence particulière de manière thermique.

15. Masse auto-adhésive pouvant être obtenue par un procédé selon l'une des revendications 1 à 14.
